(19) Europäisches Patentamt
European Patent Office
Office européen des brevets

(11) Publication number: 0 251 324 B1

(12) # EUROPEAN PATENT SPECIFICATION

(45) Date of publication of patent specification: 06.05.92 (51) Int. Cl.$^5$: C07F 9/40, C07F 9/38

(21) Application number: 87109553.5

(22) Date of filing: 02.07.87

(54) **Process for the preparation of antibiotics.**

(30) Priority: 02.07.86 IT 2100386

(43) Date of publication of application:
07.01.88 Bulletin 88/01

(45) Publication of the grant of the patent:
06.05.92 Bulletin 92/19

(84) Designated Contracting States:
AT BE CH DE ES FR GB GR IT LI LU NL SE

(56) References cited:

APPLIED MICROBIOLOGY, vol. 22, no. 1, July 1971, pages 55-60, American Society for Microbiology, US; R.F. WHITE et al.: "Microbiol epoxidation of cis-propenylphosphonic to (-)-cis-1,2-Epoxypropylphosphonic acid"

(73) Proprietor: ZAMBON S.p.A.
Via della Chimica, 9
I-36100 Vicenza(IT)

(72) Inventor: Castaldi, Graziono
Via L.Gallina, 5
I-28072 Briona Novara(IT)
Inventor: Giordano, Claudio
Via Canove Nuove, 23
I-36100 Vicenza(IT)

(74) Representative: Weinhold, Peter, Dr. et al
Patentanwälte Dr. V. Schmied-Kowarzik
Dipl.-Ing. G. Dannenberg Dr. P. Weinhold Dr.
D. Gudel Dipl.-Ing. S. Schubert Dr. P. Barz
Siegfriedstrasse 8
W-8000 München 40(DE)

EP 0 251 324 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to intermediates for antibiotics and more particularly relates to a class of intermediate compounds useful for preparing enantioselectively the antibiotic known as Fosfomycin and, from this latter, the salts thereof.

Fosfomycin (Merck Index, No. 4137, page 607, 10th Edition) is (-)-(1R,2S)-(1,2-epoxypropyl)-phosphonic acid of formula

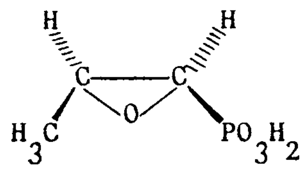

(I)

The above compound is used, preferably in the form of salt, as an antibiotic in human therapy.

Fosfomycin is a natural compound isolated from Streptomyces strains and its industrial production is performed by chemical synthesis through the preparation of cis-1-propenyl-phosphonic acid, the epoxidation and the resolution of the so obtained racemic mixture of (1,2-epoxypropyl)-phosphonic acid (see GB-A-1, 239, 989).

The resolution step is carried out by the formation of a salt with an optically active base. This involves high costs and several chemical steps to separate the desired product from the mixture, to liberate it from the base, to recover the base. A further disadvantage is the loss of the undesired isomer.

The only approach to the stereoselective synthesis of Fosfomycin starting from cis-propenyl-phosphonic acid which however, had no practical application, consists of a microbiological asymmetric epoxidation performed by some Penicillium strains [Appl. Microbiol., 22, 55, (1971)].

Therefore the utility of a chemical process giving directly the desired isomer, i.e. Fosfomycin, in an enantioselective way is evident.

There have now been found and this is the object of the present invention, new intermediates which, owing to their peculiar structure, allow to realize an enantioselective synthesis of Fosfomycin.

Such compounds have the following general formula

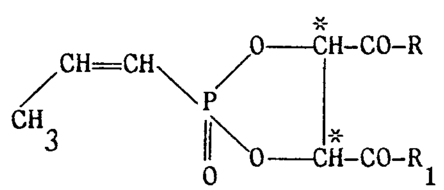

(II)

wherein R and $R_1$ are the same or different and represent a $C_1$-$C_4$ alkoxy or a $-N(R_2)_2$ group and both groups $R_2$, independently, represent hydrogen or $C_1$-$C_4$ alkyl or, together with the nitrogen atom, form a 5 or 6 membered heterocycle; the carbon atoms marked by an asterisk are both in R or S configuration.

The compounds of the formula II can be epoxidized stereoselectively, according to the herein below reported methods, owing to the fact that they contain a chiral auxiliary which directly or indirectly affects the stereochemistry of the epoxidation.

As far as patentee knows this is the first time that the synthesis of Fosfomycin is carried out by a chiral auxiliary directly bonded to the substrate.

The compounds of formula II are, therefore, the essential elements for the provision of a process which affords Fosfomycin enantioselectively; a second object of the present invention is, therefore, their use in this process.

The preparation of the compounds of formula II is carried out according to three alternative ways.

The first one comprises the reaction between cis-propenyl-phosphonic acid (1) and a halogenating agent such as thionyl chloride to obtain cis-propenyl-phosphonic acid dichloride (2) and the condensation of this latter compound with a tartaric acid derivative (3) in the form of a diester or a diamide (Scheme 1).

Scheme 1

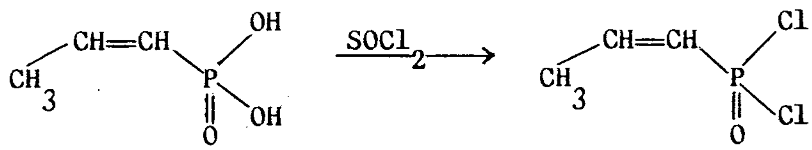


(1) (2)

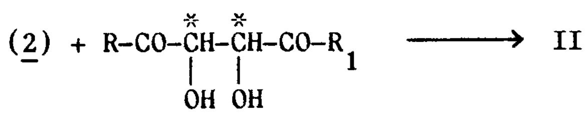


(3)

The second one comprises the reaction between $PCl_3$ and tartaric acid, preferably in the form of a diester, to give a 2-chloro-4,5-di-alkoxycarbonyl-1,3,2-dioxaphospholane (4-A); the reaction between the latter and propargyl alcohol to obtain a 2-propargyloxy-4,5-dialkoxycarbonyl-1,3,2-dioxaphospholane (5) and

its transformation into compound II by an isomerisation and a reduction (Scheme 2).

Scheme 2

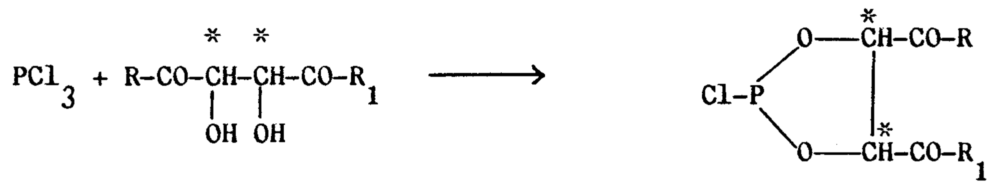

(3) (4-A)

(4-A) + $CH\equiv C-CH_2OH$

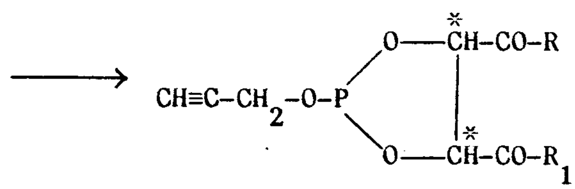

(5)

(5)

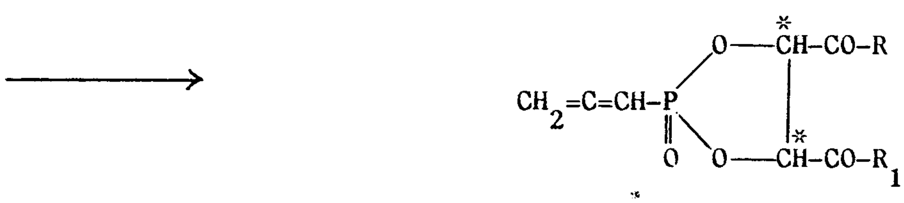

(6)

(6) $\xrightarrow{H_2}$ II

The third way of synthesis of the compounds of formula II comprises the condensation between $PCl_3$ and tartaric acid, or a derivative thereof, in the presence of water to obtain a 1,3,2-dioxaphospholane (4-B).

This compound is condensed with (Z)-1-bromo-propene in the presence of a suitable catalyst, for example $Pd[P(C_6H_5)_3]_4$ (Scheme 3).

Scheme 3

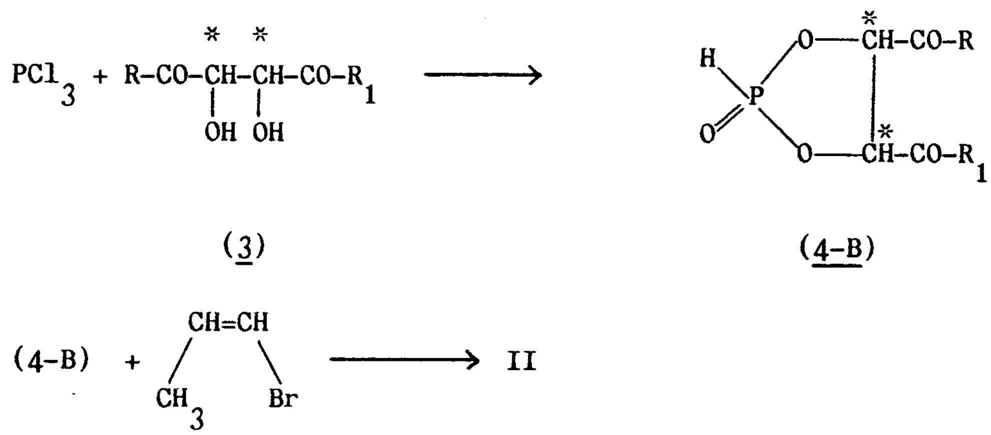

(3) (4-B)

The reactions reported in schemes 1, 2 and 3 allow to obtain the compounds II wherein R and $R_1$ may independently represent optionally substituted alkoxy or amino groups.

The use of derivatives of L(+)-tartaric acid (esters or amides) in the reactions of schemes 1, 2 or 3, affords the compounds of formula II wherein the carbon atoms marked with an asterisk are both in R configuration; by using, instead, derivatives of D(-)-tartaric acid the compounds of formula II wherein the carbon atoms marked with an asterisk are both in S configuration are obtained.

The enantioselective preparation of Fosfomycin starting from the compounds of formula II comprises two stages: a diastereoselective epoxidation reaction which, depending on the experimental conditions and on the selected reagents, may be carried out in one step or in two steps through the diastereoselective formation of an intermediate halohydrin, and a step of hydrolysis to liberate Fosfomycin and the tartaric acid derivative.

The reactions leading to the enantioselective formation of Fosfomycin starting from the compounds of formula II, are explained in the following. (The meanings of R, $R_1$ and $R_2$ are the same as those reported for formula II).

A) Direct epoxidation.

A-1) With achiral epoxidizing agents.

The treatment of a compound of formula II with peracids such as m-chloro-perbenzoic acid, perbenzoic acid, peracetic acid and perphthalic acid or with peroxides such as $H_2O_2$ and t-butyl-hydroperoxide optionally in the presence of suitable catalysts such as sodium tungstate, titanium isopropylate and molybdenum hexacarbonyl, leads to the formation of epoxides of formula

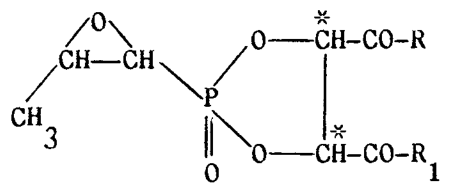

(7)

or

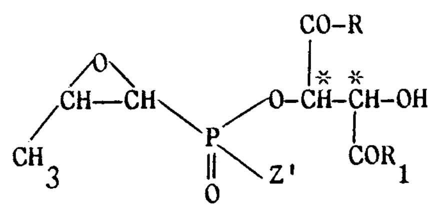

(8)

The prevailing formation of one of the two diastereomers of the compounds of formula (7) or (8) depends on the configuration of the two carbon atoms marked by an asterisk in formula II, that is it depends on the selected (+) or (-)-tartaric acid derivative.

The epoxidation reaction is carried out in an inert solvent such as water, alcohol or mixtures thereof, chlorinated solvents or aromatic hydrocarbons such as benzene or toluene, at a temperature between -20 °C and 80 °C depending on the selected oxidizing system.

In formula (8) the substituent Z′ is the moiety of the nucleophile which is present in the reaction mixture.

For example, if the epoxidation is carried out in water or alcohol, the compounds of formula (8) wherein Z′ represents hydroxy or $C_1$-$C_8$, particularly $C_1$-$C_4$, alkoxy respectively, will be obtained.

The hydrolysis of the compounds of formula (7) or (8), carried out by known methods, gives, after the work up of the reaction mixture, Fosfomycin or a salt thereof and tartaric acid or a derivative thereof.

The results obtained by the above described process of direct epoxidation clearly show that, owing to the peculiar structure of the compounds of formula II, the products of formula (7) and (8) are obtained with a good diastereoselectivity.

A-2) With chiral epoxidizing agents.

In the case in which a further increase in the diastereoselectivity of the epoxidation reaction is desired, it is possible to use chiral epoxidation catalysts or optically active peracids.

Among the chiral epoxidation catalysts titanium alkoxides according to the Sharpless epoxidation may be used [for a review see A. Pfenninger, Synthesis, 89, (1986)].

Among the optically active peracids percamphoric acid may be used according to what is described by D.R. Boyd et al., J. Org. Chem., 35, 3170 (1970).

The diastereoselectivity induced by a chiral epoxidizing agent or by an optically active peracid, in the present case, may add to the diastereoselectivity provided by the substrate itself (compound of formula II) but it may also act in the opposite way, i.e., decrease the diastereoselectivity provided by the substrate itself.

For this reason the appropriate choice of the suitable chiral system for epoxidation or of the suitable optically active peracid might need some experimentation.

A guide to the principles of choice is, anyhow, given by S. Masamune et al., Angew. Chem., Int. Ed., 24, 1, (1985).

B) Through a halohydrin.

The preparation of Fosfomycin starting from the compounds of formula II may be carried out also through the formation of an intermediate halohydrin.

In this procedure it is necessary to distinguish between the case in which the reaction for the formation of the halohydrin is carried out in an aqueous environment (B-1) or in a nucleophilic environment different from water (B-2) and the case in which it is carried out in a not nucleophilic environment in the absence of water (B-3).

B-1) Through a halohydrin in aqueous environment.

The halogenation of compound II in aqueous environment leads to the formation of a halohydrin of formula

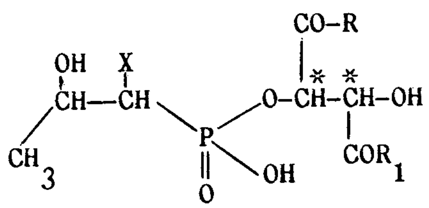

(9)

wherein X represents chlorine, bromine iodine. The halogenation is carried out through suitable halogenating agents such as N-bromo, N-iodo or N-chlorosuccinimide, N-bromoacetamide, iodine monochloride, quaternary ammonium perchloride or perbromide, sodium hypochlorite, in aqueous environment or in a mixture of water and an organic solvent.

B-2) Through a halohydrin in nucleophilic environment.

The reaction between the compound II and a nucleophile different from water leads to the opening of the dioxaphospholane ring with the creation of a new asymmetric center: the phosphorus atom.

By reacting the compound II with a nucleophile selected, for instance, from alcohols, amines, amides, phenols, thioalcohols, alkali or ammonium hydroxides, carboxylic acids or salts thereof, peracids, organic peroxides or hydrogen peroxide in a suitable solvent, which may be in many cases the nucleophile itself, the compounds of formula (10) are obtained

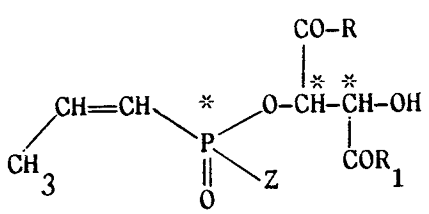

(10)

wherein R and $R_1$ have the same meanings reported in formula II and Z represents the moiety of a nucleophile.

The substituent Z, thus, can be $C_1$-$C_4$ alkoxy, amino, $C_1$-$C_4$ acylamino, phenoxy, $C_1$-$C_4$ alkylthio, $C_1$-$C_4$ acyloxy, a $O^-M^+$ group wherein $M^+$ is an alkalimetal or an ammonium cation, a peroxidic group selected from -O-O-CO-$R_3$, -O-O-$R_3$', -O-O-H (wherein $R_3$' is $C_1$-$C_4$ alkyl and $R_3$ is $C_1$-$C_4$ alkyl, phenyl, m-chlorophenyl or phthalyl).

In the compounds of formula (10) the phosphorus atom is an asymmetric centre. Therefore they exist in the form of two diastereomers (it is worth noting that, in fact, both the asymmetric carbon atoms, since they derive from the tartaric acid, have the same predetermined configuration, for example both R if they derive from esters or amides of L(+)-tartaric acid) which can be separated by conventional techniques, for example by fractional crystallization.

The halogenation of compound (10) in the presence of nucleophiles such as water, formic acid and salts thereof, leads to the formation of the halohydrin (11) of formula

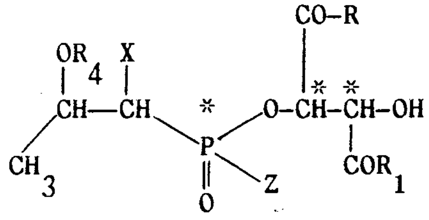

(11)

(wherein R, $R_1$, X and Z have the above reported meanings and $R_4$ represents a hydrogen atom or a formyl group).

B-3) A similar preparation can also be carried out starting from the compound of formula

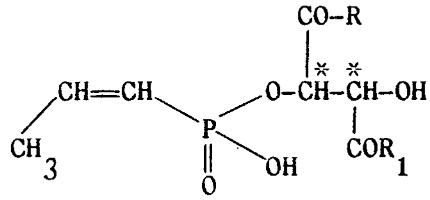

(12)

The compound (12) is obtained by treating the compound II with water, optionally in the presence of an organic solvent. The halogenation of compound (12) in the absence of water and the working up of the reaction mixture in the presence of water or other nucleophilic systems such as formic acid or salts thereof lead to the compounds of formula (11) wherein Z is hydroxy.

The preparation of Fosfomycin from the halohydrin (9) or from the halohydrin (11) comprises an epoxidation step and a hydrolysis step to liberate the phosphoric group from its substituents [tartaric derivative in case of the halohydrin (9) and tartaric derivative plus Z group in case of the halohydrin (11)] when Z is different from OH. The step of epoxidation of the halohydrin may precede or follow the hydrolysis step. Then, for instance, by treating the halohydrin (9) or (11) with a base the following epoxide is obtained

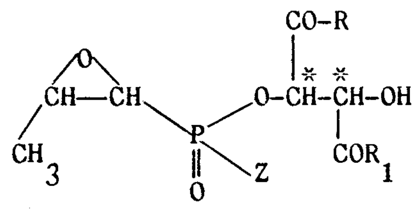

(13)

wherein Z has the above reported meanings or represents a hydroxy group.

Fosfomycin is, then, obtained from epoxide (13).

The compound (13) may be prepared also by direct epoxidation of compound (10) according to what described above under item A. If, on the contrary, the halohydrins (9) or (11) are subjected to hydrolysis, the halohydrin of formula (14) is obtained

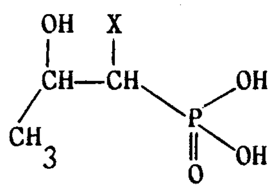

(14)

from which Fosfomycin is obtained by treatment with bases. Additionally the hydrolysis step results in the liberation of the tartaric derivative which may be used again.

The compounds of formula (7), (8), (9), (10), (11), (12) and (13) are new and are a further object of the present invention.

It has been reported above that Fosfomycin is obtained from the reactions described under A and B.

It is, however, clear to the person skilled in the art that, dependent on the operative conditions in the last step of hydrolysis, it is possible to obtain Fosfomycin or a salt thereof, for example the monosodium or disodium salt, if the hydrolysis is carried out in an alkaline environment due to the presence of sodium hydroxide.

When the purpose of the process is to obtain a salt of Fosfomycin, for example the sodium salt, generally the product of the above reported reactions does not need further workup.

It is, however, obvious that in case Fosfomycin is required as a free acid, it will be necessary to subject the salt to a reaction with a strong acid according to quite conventional techniques.

The aspect characterizing the process of the present invention in its alternatives A and B is the fact that it allows to obtain Fosfomycin enantioselectively and, as above reported, this important result is attainable owing to the peculiar structure of the intermediates of formula II and of the other intermediates prepared from these.

In order to better illustrate the present invention the following examples are given.

Example 1

Preparation of 2-(cis-1-propenyl)-2-oxo-4(R),5(R)-di-methoxycarbonyl-1,3,2-dioxaphospholane

Triethylamine (26.31 g; 260 mmol) is added slowly, under nitrogen and at 0° C, to a solution of cis-1-propenyl-phosphonic acid dichloride (20 g; 120 mmol) in dichloromethane (125 ml).

The reaction mixture is kept at 0° C and (2R,3R)-tartaric acid dimethylester (22.4 g; 120 mmol) is added portionwise.

The reaction mixture is kept at 0° C for 3 hours, then the precipitate of triethylamine hydrochloride is filtered.

The evaporation of the solvent in vacuo gives a residue (39 g) which, after distillation, gives 2-(cis-1-propenyl)-2-oxo-4(R),5(R)-di-methoxycarbonyl-1,3,2-dioxaphospholane (22 g; 84 mmol; 70% yield).
B.p. = 170 ° C/0.5 mmHg (0.067 kPa)
$[\alpha]_D^{20}$ = -32.13 ° (c = 2, chloroform)

IR ($CHCl_3$) $cm^{-1}$ = 1770, 1790 (C=O), 1650 (C=C), 1280 (P=O).
$^1$H-NMR (300 MHz) ($CDCl_3$-TMS) delta (ppm): 2.16 (ddd, 3H, $J_{H_A-CH_3}$ =7.2 Hz, $J_{H_B-CH_3}$ =1.8 Hz, $J_{P-CH_3}$ =2.3 Hz); 3.82 (s, 3H); 3.87 (s, 3H); 4.93 (dd, 1H, J=4.2 Hz, $J_{P-H}$=13.8 Hz); 5.20 (dd, 1H, J=4.2 Hz, $J_{P-H}$=10.8 Hz); 5.67 (ddq, 1H, $J_{H_A-H_B}$ =12.6 Hz, $J_{CH_3-H_B}$ = 1.8 Hz, $J_{P-H_B}$ =23 Hz); 6.80 (ddq, 1H, $J_{H_B-H_A}$ = 12.6 Hz, $J_{CH_3-H_A}$ = 7.2 Hz, $J_{P-H}$=58.8 Hz).

Example 2

Preparation of 2-(cis-1-propenyl)-2-oxo-4(R),5(R)-di-N,N-dimethyl-aminocarbonyl-1,3,2-dioxaphospholane

Triethylamine (87 g; 860 mmol) is added slowly, under nitrogen and at -10 ° C, to a mixture of cis-1-propenyl-phosphonic acid dichloride (66.7 g; 419 mmol), (2R,3R)-tartaric acid di-N,N-dimethylamide (85.7 g; 419 mmol) and dichloromethane (400 ml).

The reaction mixture is kept at -10 ° C for 3 hours, then it is filtered.

The evaporation of the solvent in vacuo gives a residue (93 g) which, after crystallization from ethyl acetate, gives 2-(cis-1-propenyl)-2-oxo-4(R),5(R)-di-N,N-dimethylaminocarbonyl-1,3,2-dioxaphospholane (92.7 g; 335 mmol; 80% yield).
M.p. = 147-149 ° C
$[\alpha]_D^{20}$ = -65.2 ° (c = 2, acetonitrile)

IR ($CHCl_3$)$cm^{-1}$= 1680 (C=O); 1650 (C=C); 1280 (P=O); 1030 (P-O-C).
$^1$H-NMR (300 MHz) ($CDCl_3$-TMS) delta (ppm): 2.16 (ddd, 3H, $J_{H_A-CH_3}$ =7.2 Hz, $J_{H_B-CH_3}$ =1.48 Hz, $J_{P-CH_3}$ =3.85 Hz); 2.97 (s, 3H); 3.00 (s, 3H); 3.17 (s, 3H); 3.22 (s, 3H); 5.48 (dd, 1H, $J_{P-H}$= 3.85 Hz, J=7.33 Hz); 5.76 (dd, 1H, $J_{P-H}$=3.11 Hz, J=7.33 Hz); 5.76 (ddq, 1H, $J_{H_A-H_B}$ =13 Hz, $J_{CH_3-H_B}$ =1.48 Hz, $J_{P-H_B}$ =23 Hz); 6.75 (ddq, 1H, $J_{H_B-H_A}$ =13 Hz, $J_{CH_3-H_A}$ =7.2 Hz, $J_{P-H_A}$ =58 Hz).
Mass (isobutane) (m/e): 291 (100%), 264 (4%), 205 (5%).

Example 3

Preparation of the diastereomeric mixture of methyl 1(R),2(R)-dimethoxycarbonyl-2-hydroxy-ethyl cis-1-propenyl-phosphonate

A mixture of 2-(cis-1-propenyl)-2-oxo-4(R),5(R)-di-methoxycarbonyl-1,3,2-dioxaphospholane (4 g; 15.2 mmol and methanol (40 ml) is kept at 15 ° C for 3 hours.

The evaporation of methanol in vacuo gives a mixture of diastereomers of methyl 1(R),2(R)-di-methoxycarbonyl-2-hydroxy-ethyl cis-1-propenyl-phosphonate (4.3 g; 14.7 mmol; 96.5% yield) in ratio 1:1.

IR ($CHCl_3$) $cm^{-1}$ = 1770, 1790 (C=O); 1650 (C=C); 1280 (P=O); 1050 (P-O-C).

$^1$H-NMR (300 MHz, $D_2O$-DSS) delta (ppm): 1.16 (2 ddd, 6H, $J_{H_A-CH_3}$=7.2 Hz, $J_{H_B-CH_3}$=1.8 Hz, $J_{P-H}$=2.3 Hz); 2.66 (d, 3H, $J_{P-H}$= 44 Hz); 2.85 (d, 3H, $J_{P-H}$=36 Hz); 2.88 (s, 3H); 2.90 (s, 3H); 2.93 (s, 3H); 2.95 (s, 3H); 3.82 (dd, 1H, $J_{H-H}$=1.83 Hz, $J_{P-H}$= 8.45 Hz); 3.86 (dd, 1H, $J_{H-H}$=2.18 Hz, $J_{P-H}$=7.2 Hz); 4.36 (dd, 1H, $J_{H-H}$=2.18 Hz, $J_{P-H}$=5.1 Hz); 4.39 (dd, 1H, $J_{H-H}$=1.83 Hz, $J_{P-H}$=5.45 Hz); 4.66 (ddq, 1H, $J_{H_A-H_B}$=12.5 Hz, $J_{CH_3-H_B}$=1.8 Hz, $J_{P-H_B}$=20 Hz); 4.85 (ddq, 1H, $J_{H_{A'}-H_{B'}}$=12.5 Hz, $J_{CH_3-H_{B'}}$=1.8 Hz, $J_{P-H_{B'}}$=20 Hz); 6.36 (ddq, 1H, $J_{H_B-H_A}$=12.5 Hz, $J_{CH_3-H_A}$=7.2 Hz, $J_{P-H_A}$=48 Hz); 6.43 (ddq, 1H, $J_{H_{B'}-H_{A'}}$= 12.5 Hz, $J_{CH_3-H_{A'}}$=7.2 Hz, $J_{P-H_A}$=48 Hz).

Mass (isobutane) (m/e): 297 (100%), 179 (12%), 163 (6%).

Example 4

Preparation of cis-1-propenyl-phosphonic acid mono-1(R),2(R)-dimethoxycarbonyl-2-hydroxy-ethyl ester

A mixture of 2-(cis-1-propenyl)-2-oxo-4(R),5(R)-di-methoxycarbonyl-1,3,2-dioxaphospholane (2.63 g; 10 mmol, acetone (30 ml) and water (1ml) is kept at room temperature for 1.5 hours.

The evaporation of the solvent in vacuo gives the crude cis-1-propenyl-phosphonic acid mono-1(R),2-(R)-di-methoxycarbonyl-2-hydroxy-ethyl ester (2.80 g; 9.96 mmol; 99.6% yield) in ratio 1:1.

The crystallization from diethyl ether/ethyl acetate gives analytically pure product.

M.p. = 75-77 ° C

$[\alpha]_D^{20}$ = + 3.2 ° (c = 2, chloroform)

$^1$H-NMR (300 MHz, $CDCl_3$-TMS) delta (ppm): 2.06 (ddd, 3H, $J_{H_A-CH_3}$=7.2 Hz, $J_{H_B-CH_3}$=1.8 Hz, $J_{P-CH_3}$=3.9 Hz); 3.86 (s, 6H); 4.73 (t, 1H, J=2.2 Hz); 5.17 (dd, 1H, J=2.2 Hz, $J_{P-H}$=11 Hz); 5.68 (ddq, 1H, $J_{CH_3-H_B}$=1.8 Hz, $J_{H_A-H_B}$=13.5 Hz, $J_{P-H_B}$=21.5 Hz); 6.61 (ddq, 1H, $J_{CH_3-H_A}$=7.2 Hz, $J_{H_B-H_A}$=13.5 Hz, $J_{P-H_A}$= 57 Hz).

Example 5

Preparation of cis-1-propenyl-phosphonic acid mono-1(R),2(R)-di-N,N-dimethylaminocarbonyl-2-hydroxy-ethyl ester

A mixture of 2-(cis-1-propenyl)-2-oxo-4(R),5(R)-di-N,N-dimethylaminocarbonyl-1,3,2-dioxaphospholane (2.9 g; 10 mmol), acetone (30 ml) and water (1 ml) is kept at room temperature for 1.5 hours. The evaporation of the solvent in vacuo gives cis-1-propenyl-phosphonic acid mono-1(R),2(R)-di-N,N-dimethylaminocarbonyl-2-hydroxy-ethyl ester (2.9 g; 9.4 mol; 94% yield).

IR (neat) $cm^{-1}$ = 3350 (OH); 1640 (C=O).
$^{1}$H-NMR (300 MHz, $D_2O$-DSS=3-(trimethylsilyl)-1-propanesulphonic acid sodium salt) delta (ppm): 1.93 (ddd, 3H, $J_{H_A-CH_3}$=7 Hz, $J_{H_B-CH_3}$=1.8 Hz, $J_{P-CH_3}$=3.2 Hz); 2.95 (s, 6H); 3.11 (s, 3H); 3.17 (s, 3H); 4.85 (d, 1H, J=7 Hz); 5.15 (dd, 1H, J=7 Hz, $J_{P-H}$=9 Hz); 5.65 (ddq, 1H, $J_{CH_3-H_B}$=1.8 Hz, $J_{H_A-H_B}$=13 Hz, $J_{P-H_B}$=22 Hz); 6.53 (ddq, 1H, $J_{CH_3-H_A}$=7 Hz, $J_{H_B-H_A}$=13 Hz, $J_{P-H_A}$ = 52 Hz).

Example 6

Preparation of cis-1-propenyl-phosphonic acid mono-1(R),2(R)-di-N,N-dimethylaminocarbonyl-2-hydroxy-ethyl ester monosodium salt

An aqueous solution (1N) of sodium hydroxide (10 ml) is added to a mixture of 2-(cis-1-propenyl)-2-oxo-4(R),5(R)-di-N,N-dimethylaminocarbonyl-1,3,2-dioxaphospholane (2.90 g; 10 mmol) and water (30 ml).

The evaporation of the solvent in vacuo and the crystallization from acetone give cis-1-propenyl-phosphonic acid mono-1(R),2(R)-di-N,N-dimethylaminocarbonyl-2-hydroxy-ethyl ester monosodium salt (3.15 g; 9.48 mmol 94.8% yield).
M.p. = 114-115 ° C
$[\alpha]_D^{20}$ = -5.89 ° (c = 2, water)

IR (nujol mull) $cm^{-1}$ = 1640; 1660 (C=O); 1650 (C=C); 1220 (P=O).
$^{1}$H-NMR (300 MHz, $D_2O$-DSS) delta (ppm): 1.96 (ddd, 3H, $J_{H_B-CH_3}$ = 1.8 Hz, $J_{H_A-CH_3}$=8 Hz, $J_{P-CH_3}$=3.5 Hz); 2.95 (s, 3H); 2.97 (s, 3H); 3.18 (s, 3H); 3.25 (s, 3H); 4.90 (d, 1H, J=7 Hz); 5.15 (dd, 1H, J=7 Hz, $J_{P-H}$=9 Hz); 5.67 (ddq, 1H, $J_{CH_3-H_B}$=1.8 Hz, $J_{H_A-H_B}$=14 Hz, $J_{P-H_B}$=19.5 Hz); 6.46 (ddq, 1H, $J_{H_B-H_A}$=14 Hz, $J_{CH_3-H_A}$=8 Hz, $J_{P-H_A}$ = 49.5 Hz).

Example 7

Preparation of the diastereomeric mixture of methyl 1(R),2(R)-di-N,N-dimethylaminocarbonyl-2-hydroxy-ethyl cis-1-propenyl-phosphonate

A mixture of 2-(cis-1-propenyl)-2-oxo-4(R),5(R)-di-N,N-dimethylaminocarbonyl-1,3,2-dioxaphospholane (2.90 g; 10 mmol) and methanol (60 ml is kept at 15 ° C for 24 hours.

The evaporation of the solvent in vacuo gives a mixture of the diastereomers of methyl 1(R),2(R)-di-N,N-dimethylaminocarbonyl-2-hydroxy-ethyl cis-1-propenyl-phosphonate (3.02 g; 9.8 mmol; 98% yield) in ratio 7:3 ($^1$H-NMR 300 MHz).

The crystallization from ethyl acetate of the above obtained mixture gives the major diastereomer in pure form.

M.p. = 53 ° C

$[\alpha]_D^{20}$ = + 17.15 ° (c = 2, $CHCl_3$)

IR ($CHCl_3$) $cm^{-1}$ = 1670 (C=O); 1650 (C=C); 1260 (P=O); 1030 (P-O-C).

$^1$H-NMR (300 MHz, $D_2O$-DSS) delta (ppm): 2.01 (ddd, 3H, $J_{H_A-CH_3}$ = 7 Hz, $J_{H_B-CH_3}$ =1.6 Hz, $J_{P-CH_3}$ =3.5 Hz); 2.90 (s, 3H); 2.95 (s, 3H); 3.13 (s, 3H); 3.20 (s, 3H); 3.70 (d, 3H, $J_{P-CH_3}$ =12.5 Hz); 4.90 (d, 1H, J=7.15 Hz); 5.31 (dd, 1H, J=7.15 Hz, $J_{P-H}$=9 Hz); 5.73 (ddq, 1H, $J_{H_A-H_B}$ =13 Hz, $J_{CH_3-H_B}$ =1.6 Hz, $J_{P-H_B}$ = 23.5 Hz); 6.87 (ddq, 1H, $J_{H_B-H_A}$ =13 Hz, $J_{CH_3-H_A}$ =7 Hz, $J_{P-H_A}$ =56 Hz).

Example 8

Preparation of the diastereomeric mixture of ethyl 1(R),2(R)-di-N,N-dimethylaminocarbonyl-2-hydroxy-ethyl cis-1-propenyl-phosphonate

Following the procedure described in example 7 and using ethanol instead of methanol, a mixture of the two desired diastereomers in ratio 7:3 is obtained with 96% yield.

Example 9

Preparation of the diastereomeric mixture of isopropyl 1(R),2(R)-di-N,N-dimethylaminocarbonyl-2-hydroxy-ethyl cis-1-propenylphosphonate

A mixture of 2-(cis-1-propenyl)-2-oxo-4(R),5(R)-di-N,N-dimethylaminocarbonyl-1,3,2-dioxaphospholane (2.90 g; 10 mmol), isopropyl alcohol (60 ml) and methanol (0.6 ml) is kept at 15 ° C for 48 hours.

The evaporation of the solvent in vacuo gives a mixture of the two diastereomers of isopropyl 1(R),2(R)-di-N,N-dimethylaminocarbonyl-2-hydroxy-ethyl cis-1-propenyl phosphonate in ratio 7:3 ($^1$H-NMR) with 94% yield.

Example 10

Preparation of cis-1-propenyl-phosphonic acid mono-1(R),2(R)-di-N-methylaminocarbonyl-2-hydroxy-ethyl ester

Triethylamine (39 g; 386 mmol) is added slowly, under nitrogen and at -10 ° C, to a mixture of cis-1-propenyl-phosphonic acid dichloride (30 g; 188 mmol), (2R,3R)-tartaric acid di-N-methylamide (33.2 g; 188 mmol) in dichloromethane (190 ml).

The reaction mixture is kept at -10 ° C for 3 hours, then it is filtered.

The evaporation of the solvent in vacuo gives a residue which is treated with acetone-water. Evaporation of the solvents and crystallization from ethanol yields cis-1-propenyl-phosphonic acid mono-1(R),2(R)-di-N-methylaminocarbonyl-2-hydroxy-ethyl ester (37 g; 131.6 mmol; 70% yield.
M.P. = 154-156 ° C
$[\alpha]_D^{20}$ = + 107.1 ° (c = 2, water)

IR (nujol mull) $cm^{-1}$ = 3440 (NH); 3340 (OH); 1680 (C=O); 1650 (C=C); 1000 (P-O-H).
$^{1}H$-NMR (300 MHz, $D_2O$-DSS) delta (ppm): 1.92 (ddd, 3H, $J_{H_A-CH_3}$ = 7.2 Hz, $J_{H_B-CH_3}$ =1.7 Hz, $J_{P-CH_3}$ =3.5 Hz); 2.73 (s, 3H); 2.80 (s, 3H); 4.48 (d, 1H, J=2 Hz); 4.87 (dd, 1H, J=2 Hz, $J_{P-H}$= 10 Hz); 5.52 (ddq, 1H, $J_{H_A-H_B}$ =12.8 Hz, $J_{CH_3-H_B}$ =1.7 Hz, $J_{P-H_B}$ =21 Hz); 6.47 (ddq, 1H, $J_{H_B-H_A}$ =12 Hz, $J_{CH_3-H_A}$ =7.2 Hz, $J_{P-H_A}$ =52 Hz).

Example 11

Preparation of 2-(cis-1-propenyl)-2-oxo-4(R),5(R)-di-isopropoxycarbonyl-1,3,2-dioxaphospholane

Following the procedure described in example 1 and using (2R,3R)-tartaric acid di-isopropyl ester the desired product is obtained.
$[\alpha]_D^{20}$ = -19.57 ° (c = 2, chloroform)

IR ($CHCl_3$) $cm^{-1}$ = 1760; 1780 (C=O); 1650 (C=C); 1290 (P=O).
$^{1}H$-NMR (300 MHz, $CDCl_3$-TMS) delta (ppm): 1.32 (d, 12H, J=6.6 Hz); 1.93 (m, 2H, J=6.6 Hz); 2.19 (ddd, 3H, $J_{H_A-CH_3}$ =7.2 Hz, $J_{H_B-CH_3}$ = 1.8 Hz, $J_{P-CH_3}$ =3.6 Hz); 5.01 (dd, 1H, J=4.8 Hz, $J_{P-H}$= 13.5 Hz); 5.13 (dd, 1H, J=4.8 Hz, $J_{P-H}$=10 Hz); 5.70 (ddq, 1H, $J_{H_A-H_B}$ =12.8 Hz, $J_{CH_3-H_B}$ =1.8 Hz, $J_{P-H_B}$ =23 Hz); 6.80 (ddq, 1H, $J_{H_B-H_A}$ =12.8 Hz, $J_{CH_3-H_A}$ =7.2 Hz, $J_{P-H_A}$ = 59 Hz).

Example 12

Preparation of the diastereomeric mixture of 1′-bromo-2′-hydroxypropyl-phosphonic acid mono-1(R),2(R)-di-N,N-dimethylaminocarbonyl-2-hydroxy-ethyl ester

N-bromoacetamide (0.69 g; 5.05 mmol) is added at 15 ° C to a solution of 2-(cis-1-propenyl)-2-oxo-4(R)-,5(R)-di-N,N-dimethylaminocarbonyl-1,3,2-dioxaphospholane (1.45 g; 5 mmol) in water (30 ml). The reaction mixture is kept at 15 ° C for 30 minutes. The evaporation of the solvent in vacuo gives a mixture of the two diastereomers (1′S,2′R) and (1′R,2′S) of 1′-bromo-2′-hydroxy-propyl-phosphonic acid mono-1(R),2(R)-di-N,N-dimethylaminocarbonyl-2-hydroxy-ethyl ester in ratio 6:4 ($^1$H-NMR analysis).
$^1$H-NMR (300 MHz, $D_2O$-DSS)

**major diastereomer: delta (ppm): 1.24 (d, 3H, J=7 Hz); 2.88 (s, 6H); 3.10 (s, 3H); 3.18 (s, 3H); 3.93 (dd, 1H, $J_{H-H}$=3 Hz, $J_{P-H}$=11.7 Hz); 4.13 (m, 1H, $J_{CH_3-H}$=7 Hz, $J_{H-H}$=3 Hz); 4.83 (d, 1H, J=7.5 Hz); 5.26 (d, 1H, J=7.5 Hz);**

**minor diastereomer: delta (ppm): 1.24 (d, 3H, J=7 Hz); 2.88 (s, 6H); 3.10 (s, 3H); 3.18 (s, 3H); 3.93 (dd, 1H, $J_{H-H}$=3 Hz, $J_{P-H}$=11.2 Hz); 4.11 (m, 1H, $J_{CH_3-H}$=7 Hz, $J_{H-H}$=3 Hz); 4.84 (d, 1H, J=7.7 Hz); 5.30 (d, 1H, J=7.7 Hz).**

**$^{31}$P-NMR (121 MHz, $D_2O$-85% phosphoric acid) delta (ppm): major diastereomer 15.09; minor diastereomer 15.26.**

Example 13

Preparation of (+)-cis-1,2-epoxypropyl-phosphonic acid

A mixture of the diastereomers (1′S,2′R) and (1′R,2′S) of 1′-bromo-2′-hydroxy-propyl-phosphonic acid mono-1(R),2(R)-di-N,N-dimethylaminocarbonyl-2-hydroxy-ethyl ester (405 mg; 1 mmol) in ratio 3:2 (obtained as described in example 12) and HBr 49% (3 ml) is kept at reflux temperature for 24 hours, cooled to room temperature and the solvent is evaporated in vacuo.

Optically active 1-bromo-2-hydroxy-propyl-phosphonic acid so obtained is converted to the known (+)-cis-1,2-epoxypropyl-phosphonic acid disodium salt.
$^1$H-NMR (90 MHz, $D_2O$-DSS) delta (ppm): 1.27 (d, 3H, J = 7 Hz); 3.93 (dd, 1H, $J_{H-H}$ = 3 Hz, $J_{P-H}$ = 10.5 Hz); 4.13 (m, 1H, J = 7 Hz, J = 3 Hz).

Example 14

Preparation of the diastereomeric mixture of 1′-bromo-2′-formyloxy-propyl-phosphonic acid mono-1(R),2(R)-di-N,N-dimethylaminocarbonyl-2-hydroxy-ethyl ester

N-bromoacetamide (276 g; 2 mmol) is added at 15 °C to a solution of the pure diastereomer of methyl 1(R),2(R)-di-N,N-dimethylaminocarbonyl-2-hydroxy-ethyl cis-1-propenyl phosphonate (obtained as described in example 7; 322 mg; 1 mmol) and water (36 mg) in dimethylformamide (3 ml). The reaction mixture is kept at 15 °C for 24 hours. The evaporation of the solvent in vacuo gives a mixture of the two diastereomers (1′S,2′R) and (1′R,2′S) of 1′-bromo-2′-formyloxy-propyl-phosphonic acid mono-1(R),2(R)-di-N,N-dimethylaminocarbonyl-2-hydroxy-ethyl ester in ratio 7:3.
$^1$H-NMR (300 MHz, DMF-d7, TMS):

**major diastereomer:** delta (ppm): 1.62 (d, 3H, J=7 Hz); 3.03 (s, 6H); 3.33 (s, 3H); 3.43 (s, 3H); 3.97 (d, 3H, $J_{P-OCH_3}$=11 Hz); 4.60 (m, 1H); 4.89 (dd, 1H, $J_{H-H}$=3.3 Hz, $J_{P-H}$= 14.65 Hz); 5.01 (d, 1H, J=7.8 Hz); 5.60 (dd, 1H, $J_{H-H}$=7.8 Hz, $J_{P-H}$6.6 Hz); 7.35 (s, 1H);

**minor diastereomer:** delta (ppm): 1.63 (d, 3H, J=7 Hz); 3.02 (s, 6H); 3.30 (s, 3H); 3.46 (s, 3H); 3.98 (d, 3H, $J_{P-OCH_3}$ = 11 Hz); 4.60 (m, 1H); 4.81 (dd, 1H, $J_{H-H}$=3.5 Hz, $J_{P-H}$=14 Hz); 4.97 (d, 1H, J=7 Hz); 5.69 (dd, 1H, $J_{H-H}$=7 Hz, $J_{P-H}$=6.3 Hz); 7.35 (s, 1H).

Example 15

Preparation of 2-(1-bromo-2-hydroxy-propyl)-2-oxo-4(R),5(R)-di-N,N-dimethylaminocarbonyl-1,3,2-dioxaphospholane

N-bromoacetamide (1.38 g; 10 mmol) is added at 15°C to a solution of 2-(cis-1-propenyl)-2-oxo-4(R),5-(R)-di-N,N-dimethylaminocarbonyl-1,3,2-dioxaphospholane (1.45 g; 5 mmol) and water (0.18 ml) in acetone (25 ml).

The reaction mixture is kept at 15°C for 24 hours.

The so obtained solid is filtered and dried in vacuo to give a pure diastereomer of 2-(1-bromo-2-hydroxy-propyl)-2-oxo-4(R),5(R)-di-N,N-dimethylaminocarbonyl-1,3,2-dioxaphospholane.
$^1$H-NMR (300 MHz, $D_2O$-DSS) delta (ppm): 1.40 (d, 3H, J=6.4 Hz); 2.93 (s, 3H); 3.20 (s, 3H); 3.23 (s, 3H); 4.28 (dd, 1H, J=2.39 Hz, J=1.90 Hz, $J_{P-H}$=12.3 Hz); 4.37 (m, 1H, J=6.4 Hz, J=1.9 Hz, J=2.39 Hz); 5.21 (ABq, 1H, J=8.79 Hz, $\Delta\nu$ =14.28 Hz); 5.24 (ABq, 1H, J=8.9 Hz, $\Delta\nu$=27.28 Hz).

Mass (isobutane m/e: 389 (98.23%); 387 (100%); 309 (23.19%); 187 (34.19%).

Example 16

Preparation of dimethyl (1S,2R)-cis-1,2-epoxypropyl-phosphonate

N-bromoacetamide (919 mg; 6.66 mmol) is added to a mixture of cis-1-propenyl phosphonic acid mono-1(R),2(R)-di-N-methylaminocarbonyl-2-hydroxyethyl ester (930 mg; 3.33 mmol) and dichloromethane (10 ml). The reaction mixture is kept at 15°C for 22 hours. Evaporation of the solvent in vacuo gives a residue that is suspended in ethylacetate. The insoluble is filtered and dried under reduced pressure to give a solid (1.1 g) having the following spectroscopic and analytical data:

$^1$H-NMR (300 MHz, $D_2O$-DSS) delta (ppm): 1.66 (d, 3H, J=6.6 Hz); 2.83 (s, 3H); 2.85 (s, 3H); 4.35 (dd, 1H, $J_{H-H}$=6.77 Hz, $J_{P-H}$=11.36 Hz); 5.42 (ddq, 1H, $J_{CH_3-H}$=6.6 Hz, $J_{H-H}$=6.77 Hz, $J_{P-H}$=26.36 Hz).
**Mass (isobutane) m/e (%)** 361 (36.1), 359 (36.6), 348 (50.8), 346 (51.4), 330 (35.4), 329 (34.9), 177 (80.5), 146 (100).

Elemental analysis (%): C 28.82; H 4.99; N 7.53; Br 23.19; P 8.21. 46% aqueous HBr (7 ml) is added to a solution of the product (1.1 g) in water (7 ml). The solution is kept at 100 ° C for 16 hours. The reaction mixture is concentrated under reduced pressure to dryness. Acetone is added to the residue and the insoluble is filtered off.

Evaporation of the solvent under reduced pressure gives a crude containing (1S,2R)-1-bromo-2-hydroxy-propyl phosphonic acid. The crude is dissolved in methanol (10 ml) then added with a cold etheral solution of diazomethane, with stirring, until the color persisted. Evaporation of the solvent under reduced pressure gives a crude that after chromatography on silica gel (eluent dichloromethane/acetone) furnishes crude dimethyl (1S,2R)-1-bromo-2-hydroxy-propyl phosphonate as an oil.

Potassium carbonate (920 mg, 6.66 mmol) is added, at 15 ° C under stirring, to a solution of the crude dimethyl (1S,2R)-1-bromo-2-hydroxy-propyl phosphonate in methanol (15 ml). The reaction mixture is kept at 15 ° C for 3 hours, then it is filtered on celite. The solvent is removed in vacuo and acetone is added to the residue, the insoluble is filtered off and the solvent is removed in vacuo. The residue is purified by chromatography on silica gel (eluent ethylether/n-hexane) to give pure dimethyl (1S,2R)-cis-1,2-epoxypropyl phosphonate.

The enantiomeric ratio 1(S),2(R):1(R),2(S) is found to be 70:30 on the base of the $^1$H-NMR analysis carried out in $CDCl_3$ using the optically active shift reagent Eu(tfc)3 Europium (III) tris[3-(trifluoromethyl-hydroxymethylene)-d-camphorate].

Example 17

Preparation of cis-1-propenyl-phosphonic acid mono-1(S),2(S)-di-N-methylaminocarbonyl-2-hydroxy-ethyl ester

Performing the experiment as described in example 10 and using 2(S),3(S)-tartaric acid di-N-methylamide instead of 2(R),3(R)-tartaric acid di-N-methylamide, cis-1-propenyl-phosphonic acid mono-1-(S),2(S)-di-N-methylaminocarbonyl-2-hydroxy-ethyl ester is obtained.

Example 18

Preparation of dimethyl (1R,2S)-cis-1,2-epoxypropyl-phosphonate

Performing the experiment as described in example 16 and starting from cis-1-propenyl-phosphonic acid mono-1(S),2(S)-di-N-methylaminocarbonyl-2-hydroxy-ethyl ester instead of its enantiomer cis-1-propenyl-phosphonic acid mono-1(R),2(R)-di-N-methylaminocarbonyl-2-hydroxy-ethyl ester, dimethyl (1R,2S)-cis-1,2-epoxypropyl-phosphonate is obtained with the same enantiomeric purity.

Example 19

Preparation of dimethyl (1S,2R)-cis-1,2-epoxypropyl-phosphonate

N-bromoacetamide (14 g; 0.10 mol) is added portionwise in 10 minutes at 15 ° C to a solution of sodium hydroxide (4.0 g, 0.1 mol) and cis-1-propenyl-phosphonic acid mono-1(R),2(R)-di-N-methylaminocarbonyl-2-hydroxy-ethyl ester (28.0 g; 0.1 mol) in water (600 ml). The reaction mixture is kept at 15 ° C for 24 hours. Evaporation of the solvent under reduced pressure gives a residue (51.2 g). The residue is added with ethylacetate at room temperature and the mixture is kept under vigorous stirring for 2 hours. The white solid is filtered off to give a mixture of (1′S,2′R) and (1′R,2′S) diastereomers of 1′-bromo-2′-hydroxy-propyl-phosphonic acid mono-1(R),2(R)-di-N-methylaminocarbonyl-2-hydroxy-ethyl ester monosodium salt (36 g, 0.09 mol, 90% yield) in the ratio 75:25 as determined by $^1$H and $^{31}$P-NMR analyses.

$^1$H-NMR (300MHz, $D_2O$, DSS):

Major diastereomer: delta (ppm): 1.32(dd, 3H, $J_{H_A-CH_3}$=6.60, $J_{P-CH_3}$=1.1); 2.82 (s, 3H); 2.83 (s, 3H); 3.80 (dd, 1H, $J_{H_B-H_A}$=3.48, $J_{P-H_A}$=11.72); 4.14 (ddq, 1H, $J_{H_A-H_B}$=3.48, $J_{CH_3-H_B}$=6.60, $J_{P-H_B}$=9.71); 4.51 (1H, broad s); 4.98 (dd, 1H, $J_{H-H}$=1.83, $J_{P-H}$=9.36).

Minor diastereomer: delta (ppm): 1.30 (dd, 3H, $J_{H_A-CH_3}$=6.60 Hz, $J_{P-CH_3}$=1.28 Hz); 2.80 (s, 3H); 2.82 (s, 3H); 3.81 (dd, $J_{H_B-H_A}$=2.93, $J_{P-H_A}$=11.70); 4.07 (ddq, 1H, $J_{H_A-H_B}$=2.93 Hz, $J_{CH_3-H_B}$=11.35 Hz); 4.52 (1H, broad s); 5.00 (dd, 1H, $J_{H-H}$=2.00 Hz, $J_{P-H}$=9.40 Hz).

$^{31}$P-NMR (121 MHz, $D_2O$, 85% phosphoric acid): major diastereomer: delta 15.19 (ppm); minor diastereomer: delta 15.06 (ppm).
IR (Nujol mull) $cm^{-1}$: 3400, 3350; 1675, 1650.
Elemental analysis, %: C 27.13; H 4.32; N 6.89; Br 20.42; P 7.67, Na 5.73.

46% aqueous HBr (100 ml) is added to a solution of the mixture of (1′S,2′R) and (1′R,2′S) diastereomers of 1′-bromo-2′-hydroxypropyl-phosphonicacid mono-1(R),2(R)-di-N-methylaminocarbonyl-2-hydroxy-ethyl ester monosodium salt (20 g, 0.05 mol) in water (100 ml). The solution is kept at 100 °C for 16 hours. The solvent is removed by distillation under reduced pressure. Acetone is added to the residue and the precipitate (methylammonium bromide) is filtered off. Evaporation of the solvent under reduced pressure gives a crude 1-bromo-2-hydroxy-propyl-phosphonic acid (20.9 g).

$^1$H-NMR (300MHz, $D_2O$, DDS) delta (ppm): 1.34 (dd, 3H, $J_{H-CH_3}$=6, $H_{P-CH_3}$=1.2); 3.98 (dd, 1H, $J_{H-H}$=3.6, $J_{P-H}$=11.5); 4.20 (ddq, 1H, $J_{H-H}$=3.6, $J_{CH_3-H}$=6.0, $J_{P-H}$=9.3).

The crude 1-bromo-2-hydroxy-propyl phosphonic acid (3 g) is dissolved in methanol (35 ml), then added with a cold etheral solution of diazomethane until the color persisted. Evaporation of the solvent under reduced pressure gives the crude dimethyl 1-bromo-2-hydroxy-propyl-phosphonate (1.8 g).

$^1$H-NMR (300MHz, $CDCl_3$-TMS) delta (ppm): 1.32 (dd, 3H, $J_{H-CH_3}$=6.2 Hz, $J_{P-CH_3}$=1.47 Hz); 3.83 (d, 3H, $J_{P-OCH_3}$=10 Hz); 3.83 (dd, 3H, $J_{P-OCH_3}$=10$^3$Hz); 3.88 (dd, 1H, $J_{H-H}$=2.2 Hz, $J_{P-H}$=12 Hz); 4.17 (ddq, 1H, $J_{CH_3-H}$=6.2, $J_{H-H}$=2.2 Hz, $J_{P-H}$=8.4 Hz).
$^{31}$P-NMR$^3$(121 MHz, $CDCl_3$): delta (ppm): 21.803.
$^{13}$C-NMR (75MHz, $CDCl_3$): delta (ppm): 21.38, 21.54 ($CH_3$, $J_{P-C}$=14.25 Hz); 47.19, 49.24 (CH-Br, $J_{P-C}$=153.75 Hz); 53.62, 53.71, 54.97, 55.06 ($OCH_3$, $J_{P-C}$=26.35 Hz); 65.54 (CH-OH).

Mass (isobutane) m/e (%): 249 (100), 247 (98.74), 169 (92.68), 151 (81.69).

Potassium carbonate (966 mg, 7 mmol) is added, at 15°C under stirring, to a solution of the crude dimethyl 1-bromo-2-hydroxy propyl phosphonate (1.8 g). The reaction mixture is kept at 15°C for 3 hours, then it is filtered on celite. The solvent is removed in vacuo and acetone is added to the residue. The precipitate (methylammonium bromide) is filtered off and the solvent removed in vacuo. The residue (1.2 g) is purified by chromatography on silica gel (eluent ethylether/hexane) to give dimethyl (1S,2R)-cis-1,2-epoxypropyl-phosphonate (0.48 g) as an oil.
$[\alpha]_D^{20}$ = -2.59° (c = 5, methanol; $[\alpha]^{20}_{365}$ = -3.00° (c = 1, chloroform).

$^1$H-NMR (300 MHz, TMS-$CDCl_3$): delta (ppm): 1.56 (dd, 3H, $J_{H-CH_3}$= 5.86 Hz, $J_{P-CH_3}$=0.7 Hz); 2.96 (dd, 1H, $J_{H-H}$=4.4 Hz, $J_{P-H}$27.5 Hz); 3.30 (ddq, $J_{H-H}$=4.4 Hz, $J_{CH_3-H}$=5.86 Hz, $J_{P-H}$=11 Hz); 3.79 (d, 3H, $J_{P-OCH_3}$=11.2 Hz); 3.82 (d, 3H, $J_{P-OCH_3}$=11.2 Hz).
$^{13}$C-NMR (75 MHz, $CDCl_3$) delta (ppm): 14.1 ($CH_3$); 48.0 and 50.8 (CH, $J_{C-P}$=20.5 Hz); 53.18 and 53.30 (CH, $J_{C-P}$=37 Hz); 76.6, 77.0 and 77.5 ($OCH_3$, $J_{C-P}$=11.25 Hz).

Mass (isobutane) m/e (%): 167 (100).

The enantiomeric ratio 1(S),2(R) to 1(R),2(S) is found to be 70:30 on the base of the $^1$H-NMR analysis carried out in $CDCl_3$ using the optically active shift reagent Eu(tfc)$_3$.

Example 20

Preparation of dimethyl (1R,2S)-cis-1,2-epoxypropyl-phosphonate

Peforming experiments as described in example 19 and starting from cis-1-propenyl-phosphonic acid mono-1(S),2(S)-di-N-methylaminocarbonyl-2-hydroxy-ethyl ester instead of its enantiomer, dimethyl (1R,2S)-cis-1,2-epoxypropyl-phosphonate is obtained with same enantiomeric purity.

Example 21

Preparation of dimethyl (1R,2S)-cis-1,2-epoxypropyl-phosphonate

N-bromoacetamide (14 g; 1.01 mol) is added portionwise in 10 minutes at 15° C to a solution of sodium hydroxide (4.0 g; 0.1 mol) and of cis-1-propenyl-phosphonic acid mono-1(S),2(S)-di-N-methylaminocarbonyl-2-hydroxy-ethyl ester (28.0 g; 0.1 mol) in water (600 ml). The reaction mixture is kept at 15° C for 24 hours. Evaporation of the solvent under reduced pressure gives a residue that is added with ethylacetate.

The mixture is kept under vigorous stirring for 2 hours. The white solid is filtered off to give a mixture of (1′R,2′S) and (1′S,2′R) diastereomers of 1′-bromo-2′-hydroxy-propyl-phosphonic acid mono-1(S),2(S)-di-N-methylaminocarbonyl-2-hydroxy-ethyl ester monosodium salt (36 g, 0.09 mol, 90% yield) in the ratio 75:25 as determined by $^1$H-NMR and $^{31}$P-NMR analyses.

Crystallization from ethanol gives the pure major diastereomer (1′R,2′S),-1′-bromo-2′-hydroxy-propyl-phosphonic acid mono-1(S),2(S)-di-N-methylaminocarbonyl-2-hydroxy-ethyl ester monosodium salt.

$^1$H-NMR (300 MHz, $D_2O$-DSS): delta (ppm): 1.27 (dd, 3H, $J_{H_A-CH_3}$=6.25 Hz, $J_{P-CH_3}$=1.1); 2.78 (6H, N-$CH_3$); 3.76 (dd, 1H, $J_{H_B-H_A}$=3.3 Hz, $J_{P-H_A}$=11.54 Hz); 4.09 (ddq, 1H, $J_{H_A-H_B}$=3.3 Hz, $J_{CH_3-H_B}$=6.25 Hz, $J_{P-H_B}$=6.04 Hz); 4.47 (1H, broad s); 4.94 (dd, 1H, $J_{H-H}$=1.83 Hz, $J_{P-H}$=9.16 Hz).

Performing the hydrolysis, esterification, ring closure as described in the example 19, starting from the pure diastereomer above obtained, enantiomerically pure (1R,2S),-dimethyl cis-1,2-epoxypropyl-phosphonate is prepared.

Example 22

Preparation of (1R,2S)-cis-1,2-epoxypropyl-phosphonic acid disodium salt

46% aqueous HBr (10 ml) is added to a solution of (1′R,2′S),-1′-bromo-2′-hydroxy-propyl-phosphonic acid mono-1(S),2(S)-di-N-methylaminocarbonyl-2-hydroxy-ethyl ester monosodium salt (2 g, 50 mmol) in water (10 ml). The solution is kept at 100° C for 16 hours. The solvent is removed by distillation under reduced pressure. Acetone is added to the residue and the precipitate is filtered off. Evaporation of the solvent under reduced pressure gives a crude (1R,2S)-1-bromo-2-hydroxy-propyl-phosphonic acid.

To the crude, dissolved in methanol, sodium methoxide (1.0 g, 20 mmol) is added at 15° C under nitrogen.

After 12 hours the insoluble is filtered off and isopropanpol is added. The precipitate is filtered, washed with isopropanol and dried to give the (1R,2S)-cis-1,2-epoxypropyl-phosphonic acid disodium salt.

$^1$H-NMR (300 MHz, $D_2O$-DSS) delta (ppm): 1.50 (d, 3H, J=6 Hz); 2.83 (dd, 1H, $J_{H-H}$=5.4 Hz, $J_{P-H}$=18 Hz); 3.27 (ddq, 1H, $J_{CH_3-H}$=6 Hz, $J_{H-H}$=5.4 Hz).

Example 23

Preparation of the diastereomeric mixture of 1'-bromo-2'-hydroxypropyl-phosphonic acid mono-1(R),2(R)-di-N-methylaminocarbonyl-2-hydroxy-ethyl ester

N-bromoacetamide (1.4 g, 10 mmol) is added portionwise in 10 minutes at 15°C to a solution of cis-1-propenyl-phosphonic acid mono-1(R),2(R)-di-N-methyl-aminocarbonyl-2-hydroxy-ethyl ester (2.80 g; 10 mmol) in water (60 ml). The reaction mixture is kept at 15°C for 24 hours. Evaporation of the solvent under reduced pressure gives a residue that is added with ethylacetate. The mixture is kept at room temperature under vigorous stirring for 2 hours. The white solid is filtered off to give a mixture of (1'S,2'R) and (1'R,2'S) diastereomers of 1'-bromo-2'-hydroxy-propyl-phosphonic acid mono-1(R),2(R)-di-N-methylaminocarbonyl-2-hydroxy-ethyl ester in 90% yield and in the ratio 70:30 as determined by $^{1}$H-NMR and $^{31}$P-NMR analyses.
$^{1}$H-NMR (300 MHz, $D_2O$-DSS) delta (ppm):

**Major diastereomer:** 1.28 (d, 3H, J=6.2 Hz); 2.77 (s, 3H); 2.78 (s, 3H); 3.78 (dd, 1H, $J_{H_A-H_B}$=2.9 Hz, $J_{P-H_B}$=11.53 Hz); 4.10 (ddq, 1H, $J_{H_B-H_A}$=2.9 Hz, $J_{CH_3-H_A}$=6.2 Hz, $J_{P-H_A}$=8.8 Hz); 4.47 (1H, broad s); 4.95 (dd, 1H, $J_{H-H}$=1.28 Hz, $J_{P-H}$=8.4 Hz).

**Minor diastereomer (significative resonances):** 1.26 (d, $J_{H-CH_3}$=6.2 Hz, $J_{P-CH_3}$=2.3 Hz); 2.75 (s); 3.80 (dd, $J_{H_A-H_B}$=2.9 Hz, $J_{P-H_B}$=11.53 Hz); 3.98 (ddq, $J_{H_B-H_A}$=2.9 Hz, $J_{P-H_B}$=9.66 Hz, $J_{CH_3-H_B}$=6.2 Hz); 4.48 (broad, s); 4.96 (dd).

$^{31}$P-NMR (121 MHz, $D_2O$; 85% phosphoric acid) delta (ppm): major diastereomer: 15.34; minor diastereomer: 15.16.
IR (Nujol mull) $cm^{-1}$: 3400; 1660.
Elemental analysis, %: C 28.65; H 4.81; N 7.41; Br 21.21; P 8.20.
Mass (isobutane) m/e (%): 379(4.72), 377(6.01), 348(3.00), 346(2.58), 279(12.45), 177(47.64), 159(29.18), 146(53.22), 141(100).

Example 24

Preparation of the diastereomeric mixture of 1'-bromo-2'-hydroxy-propyl-phosphonic acid mono-1(R),2(R)-di-N-methylaminocarbonyl-2-hydroxy-ethyl ester triethylammonium salt

Performing the experiment as described in example 23 and using the cis-1-propenyl-phosphonic acid mono-1(R),2(R)-di-N-methylaminocarbonyl-2-hydroxy-ethyl ester triethylammonium salt a mixture of (1'S,2'R) and 1'R,2'S) diastereomers of 1'-bromo-2'-hydroxy-propyl-phosphonic acid mono-1(R),2(R)-di-N-methylaminocarbonyl2-hydroxy-ethyl ester triethylammonium salt is obtained in the ratio 80:20 as determined by $^{1}$H-NMR analysis. The triethylammonium salt is converted to the corresponding sodium salt by adding 1 equivalent of sodium hydroxide to an aqueous solution of the starting material and evaporating the solvent under reduced pressure. The sodium salt shows the same spectroscopical characteristics with respect to that obtained in example 19.

In the foregoing definitions the following groups are preferred:
Preferred alkyl groups are methyl, ethyl, propyl, isopropyl, butyl, sec. butyl, isobutyl, tert.butyl, amyl, hexyl, heptyl and octyl.

Preferred alkoxy groups are methoxy, ethoxy, propoxy, isopropoxy, butoxy, sec.butoxy, isobutoxy and tert.butoxy.

Preferred groups $N(R_2)$ are $NH_2$, methylamino, ethylamino, dimethylamino, diethylamino, dipropylamino, diisopropylamino and ethylmethylamino.

Preferred acylamino groups are acetamino, propionylamino and butyrylamino.

Preferred acyloxy groups are acetoxy, ethylcarbonyloxy and propylcarbonyloxy.

Preferred alkylthio groups are methylthio, ethylthio, propylthio and butylthio.
Preferred alkali metals are lithium, sodium and potassium.

## Claims

### Claims for the following Contracting States : BE, CH, DE, FR, GB, IT, LI, LU, NL, SE

**1.** A compound of formula

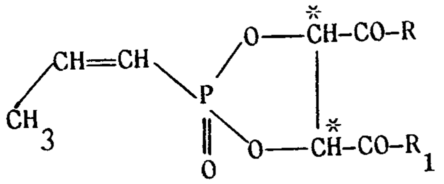

(II)

wherein R and $R_1$ are the same or different and represent a $C_1$-$C_4$ alkoxy or a $-N(R_2)_2$ group and both groups $R_2$, independently, represent hydrogen or $C_1$-$C_4$ alkyl or, together with the nitrogen atom, form a 5 or 6 membered heterocycle; the carbon atoms marked by an asterisk both being in R or S configuration.

**2.** A compound according to claim 1 for use as intermediate in an enantioselective process for the preparation of (-)-(1R,2S)-1,2-epoxypropyl-phosphonic acid or salts thereof.

**3.** An enantioselective process for the preparation of (-)-(1R,2S)-1,2-epoxypropyl-phosphonic acid or salts thereof, comprising the epoxidation of a compound according to claim 1 and the hydrolysis of the so obtained product.

**4.** A process according to claim 3 wherein the epoxidation of the compound according to claim 1 is carried out in one step by reaction with an achiral or a chiral organic peracid or hydroperoxide, optionally in the presence of an achiral or chiral epoxidation catalyst.

**5.** A process according to claim 3 wherein the epoxidation of the compound according to claim 1 is carried out by reaction with a halogenating agent in an aqueous or in a nucleophilic environment other than water through the formation of an intermediate halohydrin and the treatment of this latter with a base.

**6.** A compound of formula

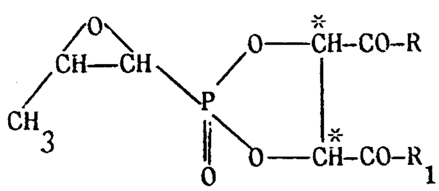

(7)

wherein R and $R_1$ have the meanings given in claim 1, the carbon atoms marked by an asterisk both being in R or S configuration.

**7.** A compound of formula

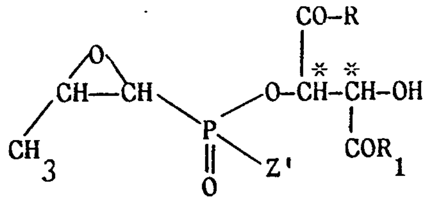

(8)

wherein Z' represents hydroxy or $C_1$-$C_8$ alkoxy, particularly $C_1$-$C_4$ alkoxy; R and $R_1$ have the meanings given in claim 1; the carbon atoms marked by an asterisk both being in R or S configuration.

**8.** A compound of formula

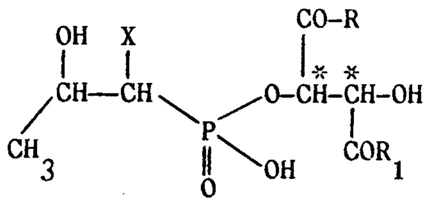

(9)

wherein X represents chlorine, bromine or iodine; and R and $R_1$ have the meanings given in claim 1; the carbon atoms marked by an asterisk both being in R or S configuration.

**9.** A compound of formula

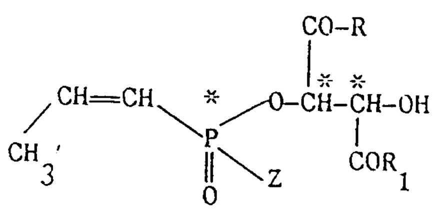

(10)

wherein Z represents the moiety of a nucleophile selected from $C_1$-$C_4$ alkoxy, amino, $C_1$-$C_4$ acylamino, phenoxy, $C_1$-$C_4$ alkylthio, $C_1$-$C_4$ acyloxy, a $O^-M^+$ group wherein $M^+$ is an alkali metal or an ammonium cation, a peroxidic group selected from -O-O-CO-$R_3$, -O-O-$R'_3$, -O-O-H wherein $R'_3$ is $C_1$-$C_4$ alkyl and $R_3$ is $C_1$-$C_4$ alkyl, phenyl, m-chlorophenyl or phthalyl; and R and $R_1$ have the meanings given in claim 1; the carbon atoms marked by an asterisk both being in the R or S absolute stereochemical configuration and the phosphorus atom forming an asymmetric center as indicated by the asterisk.

**10.** A compound of formula

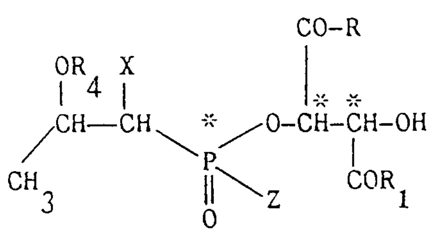

(11)

wherein X represents chlorine or bromine, Z has the meanings given in claim 9 and can also be

hydroxy when $R_4$ is different from hydrogen; R and $R_1$ have the meanings given in claim 1; and $R_4$ represents hydrogen or formyl; the carbon atoms marked by an asterisk both being in R or S configuration.

**11.** A compound of formula

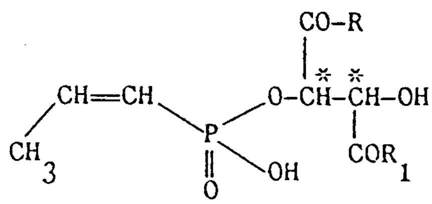

(12)

wherein R and $R_1$ have the meanings given in claim 1; the carbon atoms marked by an asterisk both being in R or S configuration.

**12.** A compound of formula

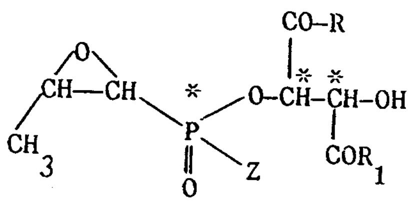

(13)

wherein Z has the meanings given in claim 9 with the exception of $C_1$-$C_4$ alkoxy; and R and $R_1$ have the meanings given in claim 1; the carbon atoms marked by an asterisk both being in R or S configuration.

**13.** Process for preparing compounds of general formula (II) by either
a) reacting a compound of formula 1

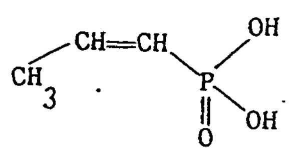

(1)

with a halogenating agent to obtain a compound of formula 2

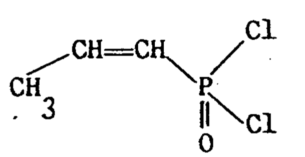

(2)

and condensation

of the latter with a compound of general formula 3

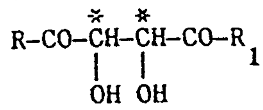

(3)

wherein R and $R_1$ are as defined in claim 1; or

b) reacting $PCl_3$ with a compound of general formula 3 to obtain a product of general formula 4-A

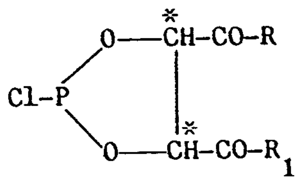

(4-A)

wherein R and $R_1$ are as defined above, reaction of the compound of formula 4-A with propargyl alcohol to obtain a compound of general formula 5

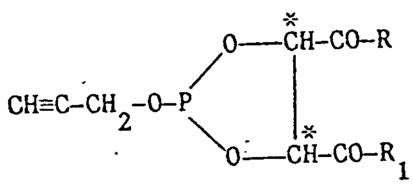

(5)

wherein R and $R_1$ are as defined above, isomerization of said compound to form a compound of general formula 6

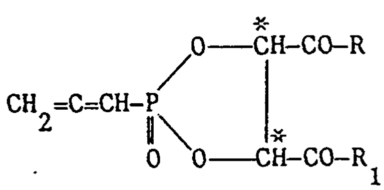

(6)

wherein

R and $R_1$ are as defined above, and reduction of the latter compound; or

c) reacting $PCl_3$ in the presence of water with a compound of general formula 3 and condensing the resulting compound of general formula 4-B

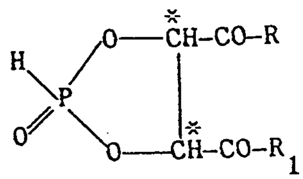

(4-B)

wherein R and $R_1$ are as defined above, with (Z)-1-bromo-propene in the presence of a suitable catalyst.

**Claims for the following Contracting States : AT, ES, GR**

**1.** An enantioselective process for the preparation of (-)-(1R,2S)-1,2-epoxypropyl-phosphonic acid or salts thereof, comprising
the epoxidation of a compound of formula

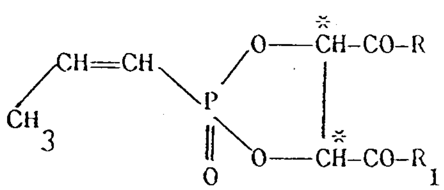

(II)

wherein R and $R_1$ are the same or different and represent a $C_1$-$C_4$ alkoxy or a $-N(R_2)_2$ group and both groups $R_2$, independently, represent hydrogen or $C_1$-$C_4$ alykl or, together with the nitrogen atom, form a 5 or 6 membered heterocycle; the carbon atoms marked by an asterisk both being in R or S configuration
and the hydrolysis of the so obtained product.

**2.** A process according to claim 1 wherein the epoxidation is carried out in one step by reaction with an achiral or a chiral organic peracid or hydroperoxide, optionally in the presence of an achiral or chiral epoxidation catalyst.

**3.** A process according to claim 1 wherein the epoxidation is carried our by reaction with a halogenating agent in an aqueous or in a nucleophilic environment other than water through the formation of an intermediate halohydrin and the treatment of this latter with a base.

**4.** Process for preparing compounds of general formula (II) by either
a) reacting a compound of formula 1

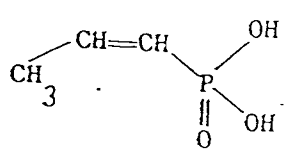

(1)

with a halogenating agent to obtain a compound of formula 2

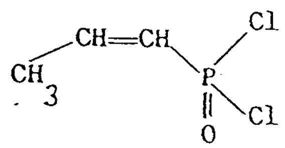

(2)

and condensation of the latter with a compound of general formula 3

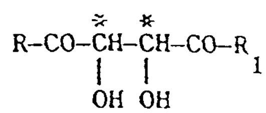

(3)

wherein R and $R_1$ are as defined in claim 1; or

b) reacting $PCl_3$ with a compound of general formula 3 to obtain a product of general formula 4-A

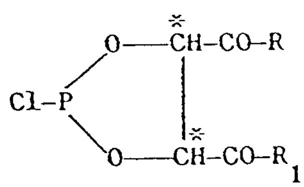

(4-A)

wherein R and $R_1$ are as defined above, reaction of the compound of formula 4-A with propargyl alcohol to obtain a compound of general formula 5

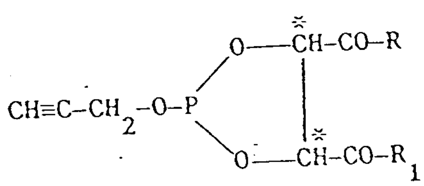

(5)

wherein R and $R_1$ are as defined above, isomerization of said compound to form a compound of general formula 6

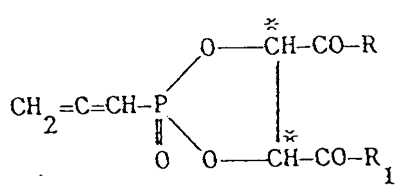

(6)

wherein

R and $R_1$ are as defined above, and reduction of the latter compound; or

c) reacting $PCl_3$ in the presence of water with a compound of general formula 3 and condensing the resulting compound of general formula 4-B

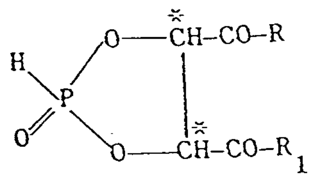

(4-B)

wherein R and $R_1$ are as defined above, with (Z)-1-bromo-propene in the presence of a suitable catalyst.

## Revendications

**Revendications pour les Etats contractants suivants : BE, CH, DE, FR, GB, IT, LI, LU, NL, SE**

**1.** Composé de formule

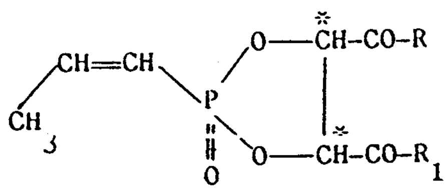

(II)

dans laquelle R et $R_1$ sont identiques ou différents et représentent un groupement alcoxy en $C_1$-$C_4$ ou -$N(R_2)_2$ et les deux groupements $R_2$ représentent, indépendamment, des atomes d'hydrogène ou des groupements alkyle en $C_1$-$C_4$ ou, avec l'atome d'azote, forment un hétérocycle à 5 ou 6 chaînons; les atomes de carbone marqués par un astérisque étant tous deux en configuration R ou S.

**2.** Composé selon la revendication 1, en vue de son utilisation comme intermédiaire dans un procédé énantiosélectif pour la préparation de l'acide (-)-(1R,2S)-1,2-époxypropylphosphonique ou de ses sels.

**3.** Procédé énantiosélectif pour la préparation de l'acide (-)-(1R,2S)-1,2-époxypropylphosphonique ou de ses sels, comprenant l'époxydation d'un composé selon la revendication 1 et l'hydrolyse du produit ainsi obtenu.

**4.** Procédé selon la revendication 3, dans lequel l'époxydation du composé selon la revendication 1 est effectuée en une étape par reaction avec un peracide ou hydroperoxyde organique non chiral ou chiral, éventuellement en présence d'un catalyseur d'époxydation non chiral ou chiral.

**5.** Procédé selon la revendication 3, dans lequel l'époxydation du composé selon la revendication 1 est effectuée par réaction avec un agent d'halogénation dans un milieu aqueux ou dans un environnement nucléophile autre que l'eau, par formation d'une halohydrine intermédiaire et traitement de cette dernière par une base.

**6.** Composé de formule

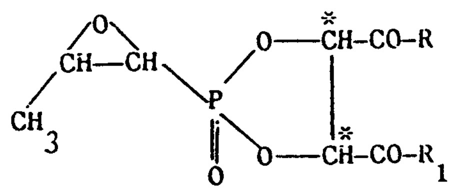

(7)

dans laquelle R et $R_1$ ont les significations données dans la revendication 1, les atomes de carbone marqués par un astérique étant tous deux en configuration R ou S.

**7.** Composé de formule

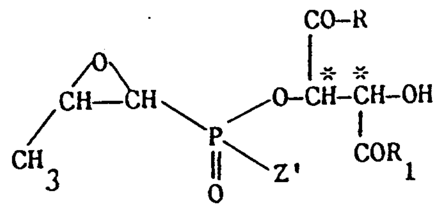

(8)

dans laquelle Z' représente un groupement hydroxy ou un groupement alcoxy en $C_1$-$C_8$, particulièrement alcoxy en $C_1$-$C_4$; R et $R_1$ ont les significations données dans la revendication 1; les atomes de carbone marqués par un astérique étant tous deux en configuration R ou S.

**8.** Composé de formule

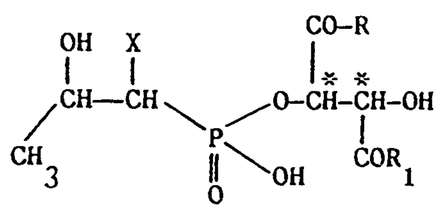

(9)

dans laquelle X représente le chlore, le brome ou l'iode; et R et $R_1$ ont les significations données dans la revendication 1; les atomes de carbone marqués par un astérisque étant tous deux en configuration R ou S.

**9.** Composé de formule

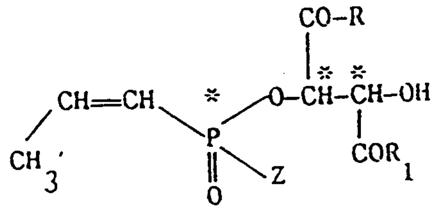

(10)

dans laquelle Z représente le fragment d'un nucléophile choisi entre les groupements alcoxy en $C_1$-$C_4$, amino, acylamino en C,-$C_4$, phénoxy, alkylthio en $C_1$-$C_4$, acyloxy en $C_1$-$C_4$, $O^-M^+$ où $M^+$ est un cation de métal alcalin ou un cation ammonium, ou un groupement peroxydé choisi entre -O-O-CO-$R_3$, -O-O-$R'_3$, -O-O-H où $R'_3$ est un groupement alkyle en $C_1$-$C_4$ et ils est un groupement alkyle en $C_1$-$C_4$,

phényle, m-chlorophényle ou phtalyle; et R et $R_1$ ont les significations données dans la revendication 1; les atomes de carbone marqués par un astérisque étant tous les deux en configuration stéréochimique absolue R ou S et l'atome de phosphore formant un centre asymétrique tel qu'indiqué par l'astérique.

**10.** Composé de formule

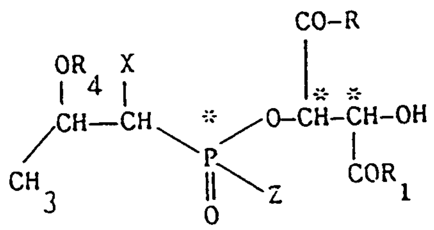

(11)

dans laquelle X représente un atome de chlore ou de brome, Z a la signification donnée dans la revendication 9 et peut également être un groupement hydroxy quand $R_4$ est autre qu'un atome d'hydrogène; R et $R_1$ ont les significations données dans la revendication 1; et $R_4$ représente un atome d'hydrogène ou un groupement formyle; les atomes de carbone marqués par un astérisque étant tous deux en configuration R ou S.

**11.** Composé de formule

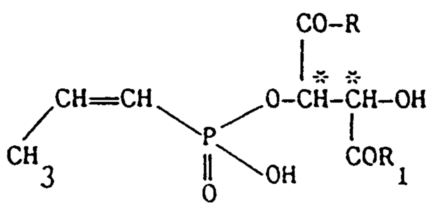

(12)

dans laquelle R et $R_1$ ont les définitions données dans la revendication 1; les atomes de carbone marqués par un astérique étant tous deux en configuration R ou S.

**12.** Composé de formule

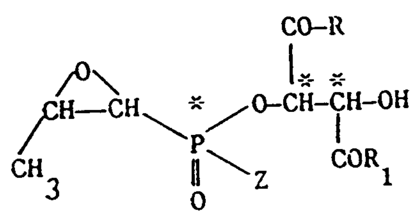

(13)

dans laquelle Z a la signification donnée dans la revendication 9 à l'exception du groupement alcoxy en $C_1$-$C_4$; et R et $R_1$ ont les significations données dans la revendication 1; les atomes de carbone marqués par un astérisque étant tous deux en configuration R ou S.

**13.** Procédé de préparation de composés de formule générale (II) soit

a) par réaction d'un composé de formule 1

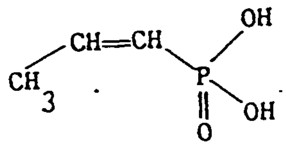

(1)

avec un agent d'halogénation pour obtenir un composé de formule 2

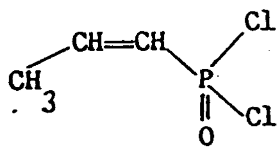

(2)

et condensation de cette dernière avec un composé de formule générale 3

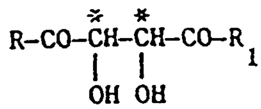

(3)

dans laquelle R et $R_1$ sont tels que définis dans la revendication 1; soit

b) par réaction de $PCl_3$ avec un composé de formule générale 3 pour obtenir un produit de formule générale

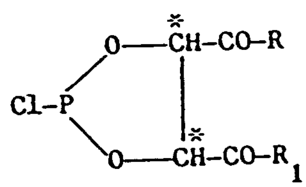

(4-A)

dans laquelle R et $R_1$ sont tels que définis précédemment, réaction du composé de formule 4-A avec l'alcool propargylique pour obtenir un composé de formule générale 5

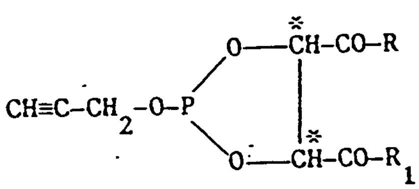

(5)

dans laquelle R et $R_1$ sont tels que définis précédemment, isomérisation dudit composé pour former

un composé de formule générale 6

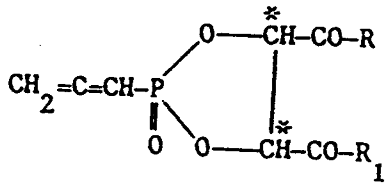

(6)

dans laquelle R et $R_1$ sont tels que définis précédemment, et réduction du dernier composé; soit
c) par réaction de $PCl_3$ en présence d'eau avec un composé de formule générale 3 et condensation du composé résultant de formule générale 4-B

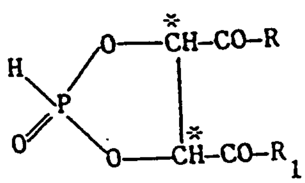

(4-B)

dans laquelle R et $R_1$ sont tels que définis précédemment, avec du (Z)-1-bromopropène en présence d'un catalyseur approprié.

**Revendications pour les Etats contractants suivants : AT, ES, GR**

**1.** Procédé énantiosélectif pour la préparation de l'acide (-)-(1R,2S)-1,2-époxypropylphosphonique et de ses sels, comprenant
l'époxydation d'un composé de formule

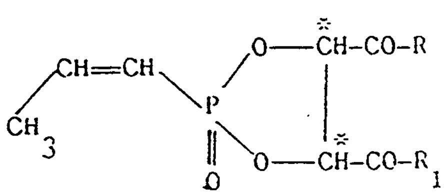

(II)

dans laquelle R et $R_1$ sont identiques ou différents et représentent un groupement alcoxy en $C_1$-$C_4$ ou $-N(R_2)_2$ et les deux groupements $R_2$ représentent indépendamment des atomes d'hydrogène ou des groupements alkyle en $C_1$-$C_4$ ou, avec l'atome d'azote, forment un hétérocycle à 5 ou 6 chaînons; les atomes de carbone marqués par un astérisque étant tous deux en configuration R ou S,
et l'hydrolyse du produit ainsi obtenu.

**2.** Procédé selon la revendication 1, dans lequel l'époxydation est effectuée en une étape par réaction avec un peracide ou un hydroperoxyde organique non chiral ou chiral, éventuellement en présence d'un catalyseur d'époxydation non chiral ou chiral.

**3.** Procédé selon la revendication 1, dans lequel l'époxydation est effectuée par réaction avec un agent d'halogénation dans un milieu aqueux ou dans un environnement nucléophile autre que l'eau, par formation d'une halohydrine intermédiaire et traitement de cette dernière par une base.

**4.** Procédé de préparation de composés de formule générale (II) soit
a) par réaction d'un composé de formule 1

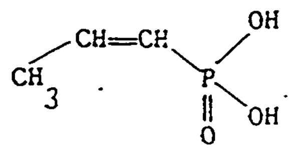

(1)

avec un agent d'halogénation pour obtenir un composé de formule 2

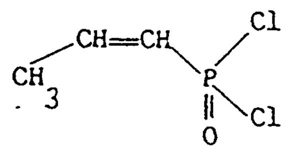

(2)

et condensation de cette dernière avec un composé de formule générale 3

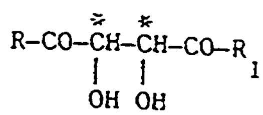

(3)

dans laquelle R et $R_1$ sont tels que définis dans la revendication 1; soit
b) par réaction de $PCl_3$ avec un composé de formule générale 3 pour obtenir un produit de formule générale 4-A

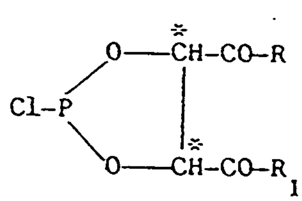

(4-A)

dans laquelle R et $R_1$ sont tels que définis précédemment, réaction du composé de formule 4-A avec l'alcool propargylique pour obtenir un composé de formule générale 5

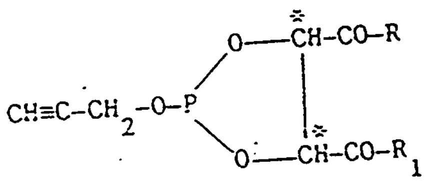

(5)

dans laquelle R et $R_1$ sont tels que définis précédemment, isomérisation dudit composé pour former un composé de formule générale 6

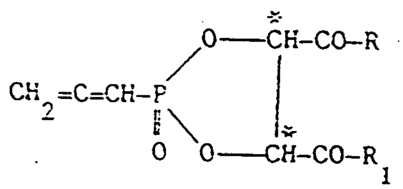

(6)

dans laquelle R et $R_1$ sont tels que définis précédemment, et réduction du dernier composé; soit c) par réaction de $PCl_3$ en présence d'eau avec un composé de formule générale 3 et condensation du composé résultant de formule générale 4-B

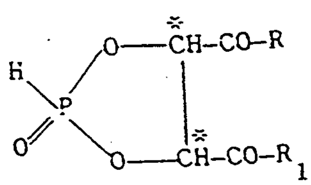

(4-B)

dans laquelle R et $R_1$ sont tels que définis précédemment, avec du (Z)-1-bromopropène en présence d'un catalyseur approprié.

## Patentansprüche

**Patentansprüche für folgende Vertragsstaaten : BE, CH, DE, FR, GB, IT, LI, LU, NL, SE**

1. Verbindung der Formel

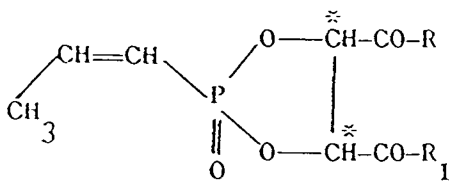

(II)

worin R und $R_1$ gleich oder verschieden sind und eine $C_1$-$C_4$-Alkoxy- oder eine $-N(R_2)_2$-Gruppe bedeuten und beide Gruppen $R_2$ unabhängig Wasserstoff oder $C_1$-$C_4$-Alkyl bedeuten oder, zusammen mit dem Stickstoffatom, einen 5- oder 6-gliedrigen Heterozyklus bilden. wobei die durch ein Sternchen markierten Kohlenstoffatome beide in R- oder S-Konfiguration vorliegen.

2. Verbindung gemäß Anspruch 1 zur Verwendung als Zwischenprodukt bei einem enantioselektiven Verfahren zur Herstellung von (-)-(1R,2S)-1,2-Epoxypropyl-phosphonsäure oder deren Salzen.

3. Enantioselektives Verfahren zur Herstellung von (-)-(1R,2S)-1,2-Epoxypropyl-phosphonsäure oder deren Salzen, das die Epoxidierung einer Verbindung gemäß Anspruch 1 und die Hydrolyse des so erhaltenen Produktes umfaßt.

4. Verfahren gemäß Anspruch 3, bei dem die Epoxidierung der Verbindung gemäß Anspruch 1 in einem Schritt durch Reaktion mit einer achiralen oder chiralen organischen Persäure oder einem Hydroperoxid, gegebenenfalls in Gegenwart eines achiralen oder chiralen Epoxidierungskatalyators, durchgeführt wird.

5. Verfahren gemäß Anspruch 3, bei dem die Epoxidierung der Verbindung gemäß Anspruch 1 durch Reaktion mit einem Halogenierungsmittel in einer wäßrigen Umgebung oder in einer von Wasser verschiedenen nukleophilen Umgebung über die Bildung eines Halogenhydrins als Zwischenprodukt und Behandlung des letzteren mit einer Base durchgeführt wird.

6. Verbindung der Formel

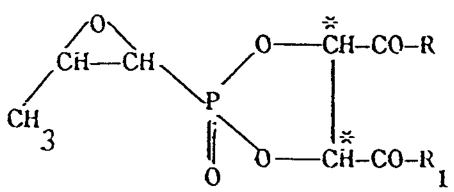

(7)

worin R und $R_1$ die in Anspruch 1 angegebenen Bedeutungen haben, und die durch ein Sternchen markierten Kohlenstoffatome beide in R- oder S-Konfiguration vorliegen.

**7.** Verbindung der Formel

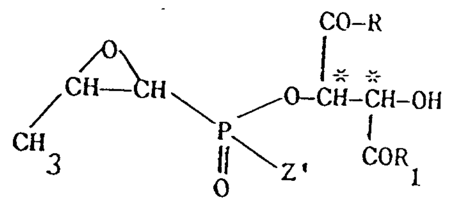

(8)

worin Z' Hydroxy oder $C_1$-$C_8$-Alkoxy, insbesondere $C_1$-$C_4$-Alkoxy, bedeutet, R und $R_1$ die in Anspruch 1 angegebenen Bedeutungen haben und die durch ein Sternchen markierten Kohlenstoffatome beide in R- oder S-Konfiguration vorliegen.

**8.** Verbindung der Formel

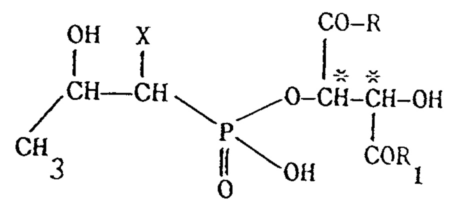

(9)

worin X Chlor, Brom oder Jod bedeutet, R und $R_1$ die in Anspruch 1 angegebenen Bedeutungen haben und die durch ein Sternchen markierten Kohlenstoffatome beide in R- oder S-Konfiguration vorliegen.

**9.** Verbindung der Formel

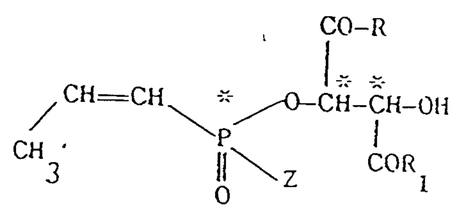

(10)

worin Z den Teil eines Nukleophils, ausgewählt aus $C_1$-$C_4$-Alkoxy, Amino, $C_1$-$C_4$-Acylamino, Phenoxy, $C_1$-$C_4$-Alkylthio, $C_1$-$C_4$-Acyloxy, eine $O^-M^+$-Gruppe, worin $M^+$ ein Alkalimetall oder ein Ammoniumkation ist, eine Peroxidgruppe, ausgewählt aus -O-O-CO-$R_3$, -O-O-$R'_3$, -O-O-H, worin $R'_3$ $C_1$-$C_4$-Alkyl ist und $R_3$ $C_1$-$C_4$-Alkyl, Phenyl, m-Chlorphenyl oder Phthalyl ist, bedeutet, R und $R_1$ die in Anspruch 1 angegebenen Bedeutungen haben, die durch die Sternchen markierten Kohlenstoffatome beide in absoluter stereochemischer R- oder S-Konfiguration vorliegen und das Phosphoratom ein Asymmetriezentrum bildet, wie es durch das Sternchen angezeigt wird.

**10.** Verbindung der Formel

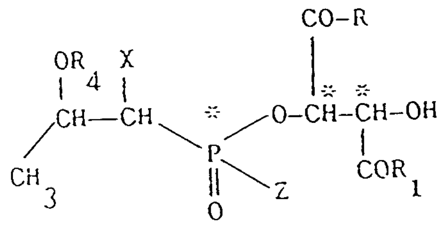

(11)

worin X Chlor oder Brom bedeutet, Z die in Anspruch 9 angegebenen Bedeutungen hat und auch Hydroxy sein kann, wenn $R_4$ von Wasserstoff verschieden ist, R und $R_1$ die in Anspruch 1 angegebenen Bedeutungen haben, $R_4$ Wasserstoff oder Formyl bedeutet und die durch ein Sternchen markierten Kohlenstoffatome beide in R- oder S-Konfiguration vorliegen.

**11.** Verbindung der Formel

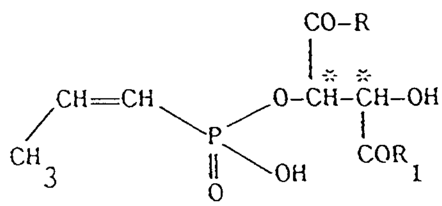

(12)

worin R und $R_1$ die in Anspruch 1 angegebenen Bedeutungen haben und die durch ein Sternchen markierten Kohlenstoffatome beide in R-oder S-Konfiguration vorliegen.

**12.** Verbindung der Formel

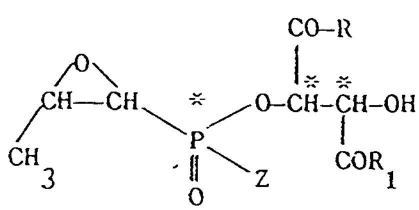

(13)

worin Z die in Anspruch 9 angegebenen Bedeutungen mit Ausnahme von $C_1$-$C_4$-Alkoxy hat, R und $R_1$ die in Anspruch 1 angegebenen Bedeutungen haben und die durch ein Sternchen markierten Kohlenstoffatome beide in R- oder S-Konfiguration vorliegen.

**13.** Verfahren zur Herstellung von Verbindungen der allgemeinen Formel (11), entweder durch

a) Umsetzen einer Verbindung der Formel 1

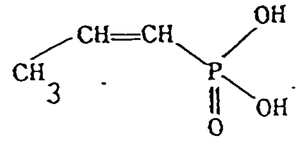

(1)

mit einem Halogenierungsmittel zur Bildung einer Verbindung der Formel 2

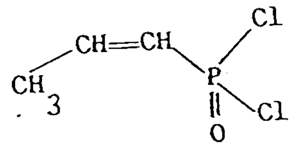

(2)

und Kondensieren der letzteren mit einer Verbindung der allgemeinen Formel 3

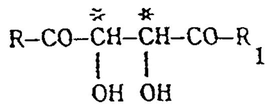

(3)

worin R und $R_1$ wie in Anspruch 1 definiert sind, oder

b) Umsetzen von $PCl_3$ mit einer Verbindung der allgemeinen Formel 3, um ein Produkt der allgemeinen Formel 4-A zu erhalten

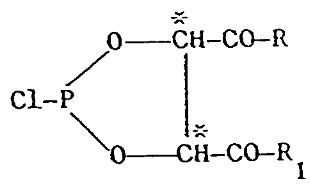

(4-A)

worin R und $R_1$ wie oben definiert sind, Umsetzen der Verbindung der Formel 4-A mit Propargylalkohol zur Bildung einer Verbindung der allgemeinen Formel 5

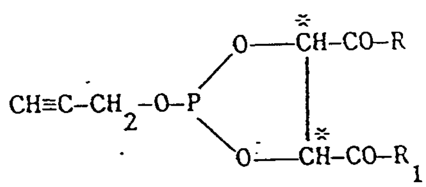

(5)

worin R und $R_1$ wie oben definiert sind, Isomerisieren dieser Verbindung zur Bildung einer Verbindung der allgemeinen Formel 6

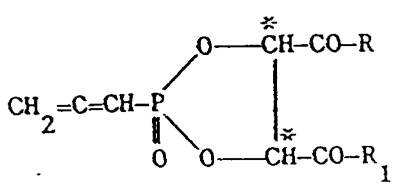

(6)

worin R und $R_1$ wie oben definiert sind, und Reduzieren der letztgenannten Verbindung; oder

c) Umsetzen von $pCl_3$ in Gegenwart von Wasser mit einer Verbindung der allgemeinen Formel 3 und Kondensieren der erhaltenen Verbindung der allgemeinen Formel 4-B

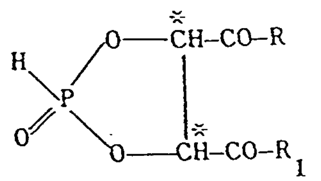

(4-B)

worin R und $R_1$ wie oben definiert sind, mit (Z)-1-Brompropen in Gegenwart eines geeigneten Katalysators.

**Patentansprüche für folgende Vertragsstaaten : AT, ES, GR**

**1.** Enantioselektives Verfahren zur Herstellung von (-)-(1R,2S)-1,2-Epoxypropyl-phosphonsäure oder deren Salzen, das die Epoxidierung einer Verbindung der Formel

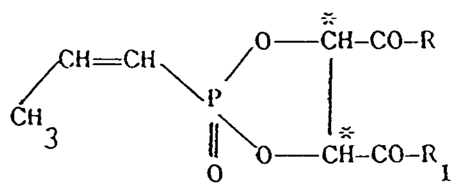

(II)

worin R und $R_1$ gleich oder verschieden sind und eine $C_1$-$C_4$-Alkoxy- oder eine $-N(R_2)_2$-Gruppe bedeuten und beide Gruppen $R_2$ unabhängig Wasserstoff oder $C_1$-$C_4$-Alkyl bedeuten oder, zusammen mit dem Stickstoffatom, einen 5- oder 6-gliedrigen Heterozyklus bilden, wobei die durch ein Sternchen markierten Kohlenstoffatome beide in R- oder S-Konfiguration vorliegen,
und die Hydrolyse des so erhaltenen Produktes umfaßt.

**2.** Verfahren gemäß Anspruch 1, bei dem die Epoxidierung in einem Schritt durch Reaktion mit einer achiralen oder chiralen organischen Persäure oder einem Hydroperoxid, gegebenenfalls in Gegenwart eines achiralen oder chiralen Epoxidierungskatalyators, durchgeführt wird.

**3.** Verfahren gemäß Anspruch 1, bei dem die Epoxidierung durch Reaktion mit einen Halogenierungsmittel in einer wäßrigen Umgebung oder in einer von Wasser verschiedenen nukleophilen Umgebung über die Bildung eines Halogenhydrins als Zwischenprodukt und Behandlung des letzteren mit einer Base durchgeführt wird.

**4.** Verfahren zur Herstellung von Verbindungen der allgemeinen Formel (11), entweder durch
a) Umsetzen einer Verbindung der Formel 1

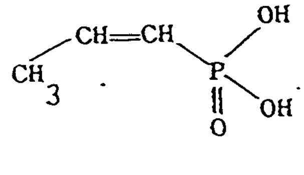

(1)

mit einem Halogenierungsmittel zur Bildung einer Verbindung der Formel 2

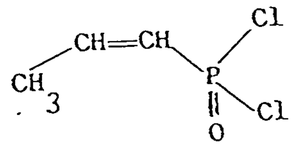

(2)

und Kondensieren der letzteren mit einer Verbindung der allgemeinen Formel 3

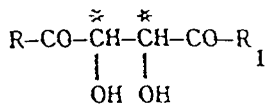

(3)

worin R und $R_1$ wie in Anspruch 1 definiert sind,
oder
b) Umsetzen von $PCl_3$ mit einer Verbindung der allgemeinen Formel 3, um ein Produkt der allgemeinen Formel 4-A zu erhalten

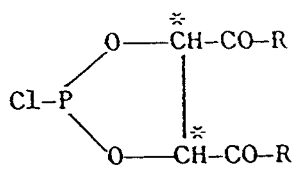

(4-A)

worin R und $R_1$ wie oben definiert sind, Umsetzen der Verbindung der Formel 4-A mit Propargylalkohol zur Bildung einer Verbindung der allgemeinen Formel 5

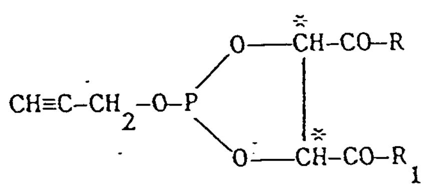

(5)

worin R und $R_1$ wie oben definiert sind, Isomerisieren dieser Verbindung zur Bildung einer Verbindung der allgemeinen Formel 6

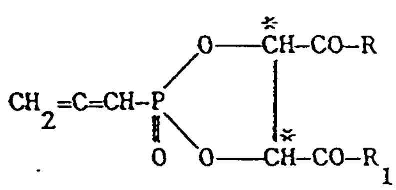

(6)

worin R und $R_1$ wie oben definiert sind, und Reduzieren der letztgenannten Verbindung; oder

c) Umsetzen von $PCl_3$ in Gegenwart von Wasser mit einer Verbindung der allgemeinen Formel 3 und Kondensieren der erhaltenen Verbindung der allgemeinen Formel 4-B

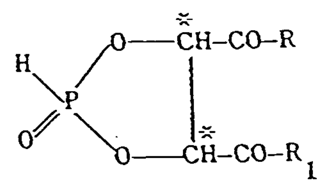

(4-B)

worin R und $R_1$ wie oben definiert sind, mit (Z)-1-Brompropen in Gegenwart eines geeigneten Katalysators.